(19) Europäisches Patentamt
European Patent Office
Office européen des brevets

(11) **EP 2 492 888 B1**

(12) **EUROPEAN PATENT SPECIFICATION**

(45) Date of publication and mention
of the grant of the patent:
**12.10.2016 Bulletin 2016/41**

(51) Int Cl.:
**G08G 1/16** *(2006.01)*    **G06K 9/00** *(2006.01)*
**B60W 30/12** *(2006.01)*    **B60Q 9/00** *(2006.01)*

(21) Application number: **12156185.6**

(22) Date of filing: **20.02.2012**

(54) **Lane departure warning apparatus and system**

Vorrichtung und System zur Warnung bei Verlassen der Straßenspur

Appareil et système d'avertissement de sortie de voie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2011 JP 2011037669**

(43) Date of publication of application:
**29.08.2012 Bulletin 2012/35**

(73) Proprietor: **Clarion Co., Ltd.
Saitama 330-0081 (JP)**

(72) Inventors:
• **Imai, Masato
Tokyo, 100-8220 (JP)**

• **Okada, Takashi
Tokyo, 100-8220 (JP)**
• **Sakata, Masao
Saitama, 330-0081 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 1 962 254    JP-A- 2009 143 309
JP-A- 2009 181 310    US-A1- 2010 246 889
US-A1- 2010 295 668**

EP 2 492 888 B1

Description

BACKGROUND OF THE INVENTION

Field of the Invention

The present invention relates to a lane departure warning apparatus for determining lane departure of a vehicle.

Background Art

Various technologies have been proposed for picking up images of the periphery of a vehicle by an in-vehicle camera and recognizing objects (e.g., vehicles and pedestrians), road markings and signs (e.g., traffic markings painted on the road such as dividing lines and "STOP" signs) in the picked-up images. For example, if it is possible to recognize dividing lines painted on the road on which a vehicle is travelling with an in-vehicle camera and to obtain the position of the vehicle in a lane, it becomes possible to issue a warning to a driver upon departure of the vehicle from the dividing lines or to control steering and braking of the vehicle so that the departure can be suppressed.

As such systems for issuing a warning upon departure of a vehicle from a lane, there are Lane Departure Warning Systems (LDWS) standardized by JIS (Japanese Industrial Standard) in JIS D 0804 and by ISO (International Organization for Standardization) in ISO/DIS 17361. In order to implement such systems, it is necessary to recognize various kinds of dividing lines (such as solid lines, dashed lines and dotted lines) by an in-vehicle camera, though some dividing lines may be unrecognizable as they are faded or peeled off, and consequently systems with solutions to such problems have been developed.

For example, JP Patent Publication (Kokai) No. 2009-298362 A discloses an apparatus in which when only one-side dividing line of a lane is recognized and a distance from a vehicle to the one-side dividing line is equal to or less than a specified value, then the position of the other-side dividing line is estimated to determine departure.

The United States Patent Application No. US 2010/0295668 A1 discloses a driving support ECU comprising a white line detection part for detecting a lane marking installed on at least one of a right side and a left side of a line in which the vehicle is running and a white line estimation part for estimating a position of the other lane markings on the other of the right side and the left side.

The United States Patent Application No. US 2010/0246889 A1 discloses a vehicle driving assistance apparatus comprising an image capturing system with a white line type recognition section and a white line type storage section. A vehicle control system executes a vehicle control on the basis of the white line type estimated by a white line type estimation section.

The European Patent Application No. EP 1962254 A2 discloses an in-vehicle running-environment recognition apparatus comprising an image processing unit for detecting a lane mark and an output unit for issuing a lane deviation warning from a lane mark.

The Japanese Patent Application No. JP 2009/181310 A discloses a road parameter estimation device for estimating road parameters from an image obtained by photography by a camera.

The Japanese Patent Application No. JP 2009/143309 A discloses a lane maintaining support system for determining the departure tendency of at least one out of the lane dividing lines of the right and left of a vehicle.

SUMMARY OF THE INVENTION

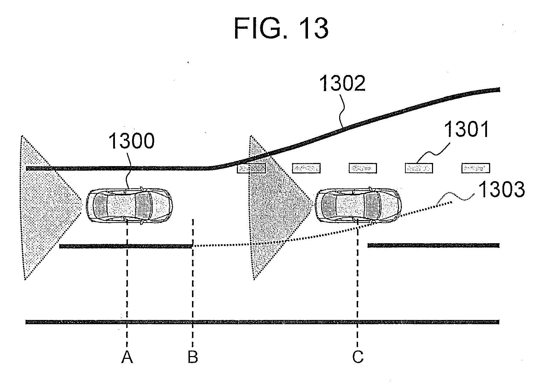

However, in JP Patent Publication (Kokai) No. 2009-298362 A, misrecognition of the one-side dividing line causes error in estimation of the position of the other-side dividing line, thereby resulting in false warnings and absence of a warning in departure determination. For example, when a dividing line 1301 (thick dotted line in Japan) between a main lane and a branch road is faded and unrecognizable at a junction point of a highway as shown in FIG. 13, the apparatus continues to recognize a solid line 1302 on the left-hand side of the vehicle along the branch road, and when the vehicle passes a space between dashed lines on the right-hand side in this state, the apparatus interpolates the space between the dashed lines on the right-hand side as shown with a dotted line 1303 based on the recognized left-hand side solid line 1302. Since the vehicle departs from the dotted line 1303 upon reaching a point C, a warning is raised even though the vehicle travels the main lane in a straight line, and therefore the warning ends up as a false warning.

In view of the above-mentioned problems, an object of the present invention is to provide a lane departure warning apparatus capable of preventing false warnings and absence of a warning regarding lane departure which is attributed to special road geometries such as junctions and tollgates and the like.

In order to accomplish the above object, a lane departure warning apparatus for outputting a warning signal upon determining departure of a vehicle from a lane in the present invention performs the steps of: when one dividing line in a vehicle width direction of the vehicle is non-detected, estimating a position of the non-detected one dividing line based on a position of the other dividing line as a first estimation dividing line; estimating a position of the non-detected one dividing line based on a position of the one dividing line prior to non-detection as a second estimation dividing line; and/or comparing the first estimation dividing line with the second estimation dividing line to determine lane departure.

According to the present invention, it becomes possible to prevent false warnings and absence of a warning regarding the lane departure attributed to special road geometries such as junctions.

BRIEF DESCRIPTION OF THE DRAWINGS

FIG. 1 is a schematic view of a lane departure warning apparatus according to a first embodiment of the present invention.

FIG. 2 is a flow chart for explaining processing steps in the lane departure warning apparatus according to the first embodiment of the present invention.

FIG. 3 is a schematic view showing the details of dividing line detection processing in a dividing line detection section in the present invention.

FIG. 4 is a schematic view showing the details of processing for calculating distance to a dividing line in the dividing line detection section in the present invention.

FIG. 5 is an exemplary flow chart explaining dividing line position estimation processing in the present invention.

FIG. 6 is a view explaining a method for estimating first and second estimation dividing lines.

FIG. 7 is a view explaining a method for selecting the first and second estimation dividing lines.

FIG. 8 is an exemplary view showing a method for correcting a measurement result of an image pickup device which picks up images of the rear side of a vehicle to a value for the front wheel position.

FIG. 9 is a schematic view of a lane departure warning apparatus according to a second embodiment of the present invention.

FIG. 10 is an exemplary flow chart explaining dividing line position estimation processing in the present invention.

FIG. 11 is an exemplary view showing a method for determining whether or not a steering (rudder) angle is convergent.

FIG. 12 is an exemplary view showing a method for determining whether or not a dividing line position is correct.

FIG. 13 is a view showing a concrete example of the details of processing steps in a lane departure warning apparatus before the present invention is applied thereto.

FIG. 14 is a schematic view showing a concrete example of the details of processing steps in the lane departure warning apparatus according to the second embodiment of the present invention.

FIG. 15 is a schematic view showing a concrete example of the details of processing steps in the lane departure warning apparatus according to the second embodiment of the present invention.

FIG. 16 is a schematic view of a lane departure warning apparatus according to a third embodiment of the present invention.

FIG. 17 is a flow chart for explaining processing steps of the lane departure warning apparatus according to the third embodiment of the present invention.

FIG. 18 is a schematic view showing a concrete example of the details of processing steps in the lane departure warning apparatus according to the third embodiment of the present invention.

FIG. 19 is a schematic view showing a concrete example of the details of processing steps in the lane departure warning apparatus according to the third embodiment of the present invention.

DETAILED DESCRIPTION OF THE PREFERRED EMBODIMENTS

Embodiments of the present invention will be described hereinbelow with reference to the drawings.

For the rest of this description the term "rudder" is to be interpreted as "steering".

<First Embodiment>

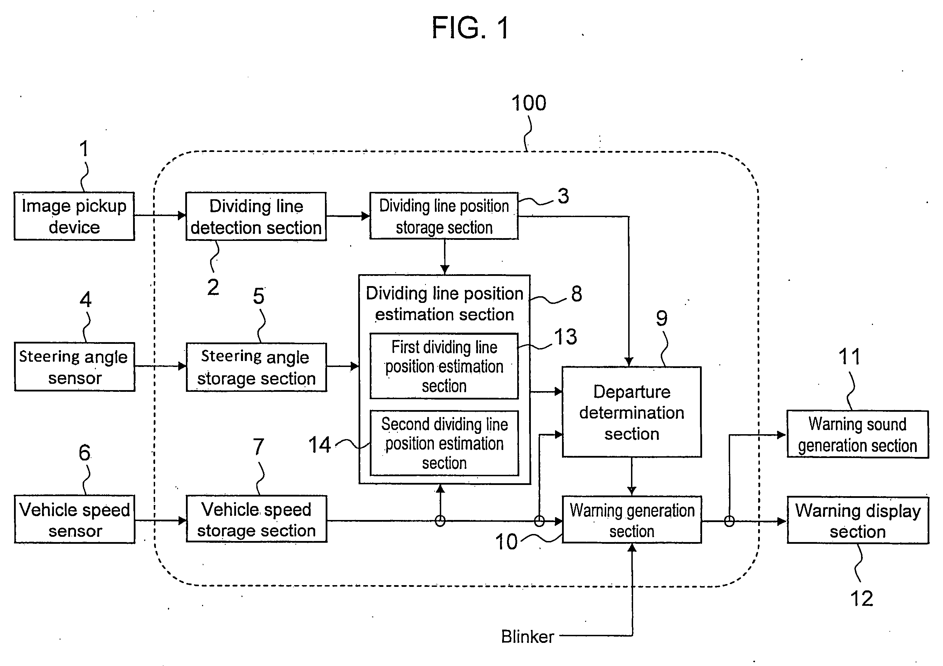

FIG. 1 is a schematic view of a lane departure warning system in a first embodiment.

The lane departure warning system comprises a lane departure warning apparatus 100, an image pickup device 1, a rudder sensor 4, a vehicle speed sensor 6, a warning sound generation section 11, and a warning display section 12.

First, a description will be given of structure and processing details of the lane departure warning apparatus 100.

The lane departure warning apparatus 100 comprises a dividing line detection section 2, a dividing line position storage section 3, a rudder angle storage section 5, a vehicle speed storage section 7, a dividing line position estimation section 8, a first dividing line position estimation section 13, a second dividing line position estimation section 14, a departure determination section 9, and a warning generation section 10 and is structured to have a program installed in an unshown computer of the lane departure warning apparatus 100 so as to be executed repeatedly in a predetermined cycle.

The lane departure warning apparatus 100 is also structured to receive input of images picked up by the image pickup device 1 as well as input of a rudder angle of a vehicle detected by the rudder sensor 4 and a vehicle speed detected by the vehicle speed sensor 6, and to output a warning to external warning sound generation section 11 and warning display section 12 upon determining that the vehicle may depart from a lane on which the vehicle is travelling.

The image pickup device 1 picks up images of the outside of the vehicle with an image pickup element such as CCD (Charge Coupled Device) image sensors and CMOS (Complementary Metal Oxide Semiconductor) image sensors, and outputs the obtained images to the lane departure warning apparatus 100 as analog data without applying any processing thereto or outputs computer-processable image data, which are obtained by converting the obtained images through digital processing, to the lane departure warning apparatus 100 with use of an exclusive line and the like.

The dividing line detection section 2 detects dividing lines (roadway center lines, lane boundary lines (a pair of a left lane line and a right lane line, etc.), roadway outside lines, etc.) painted on the roads with use of the data on images of the outside of the vehicle (image information) obtained by the in-vehicle image pickup device 1.

The dividing line position storage section 3 stores a plurality of past positions of a dividing line detected in the dividing line detection section 2. RAMs (Random Access Memories) inside computer are generally used as storage media therefor.

The rudder sensor 4 uses a method of directly or indirectly measuring turning angles of a steering shaft.

The rudder angle storage section 5 acquires rudder angle values, i.e., measurement values of the rudder sensor 4 inputted with use of such communication means as an in-vehicle LAN (Local Area Network), and stores a plurality of past values in a memory such as a RAM inside computer.

The vehicle speed sensor 6 uses methods such as a method for detecting a vehicle speed by averaging values provided by wheel speed sensors mounted on each of the front, rear, right and left wheels of the vehicle, and a method for calculating a vehicle speed by integrating values of acceleration of the vehicle provided by an acceleration sensor mounted thereon.

The vehicle speed storage section 7 acquires vehicle speed values, i.e., measurement values of the vehicle speed sensor 6 inputted with such communication means as an in-vehicle LAN, and stores a plurality of past values in a memory such as a RAM inside computer.

The dividing line position estimation section 8, which comprises a first dividing line position estimation section 13 and a second dividing line position estimation section 14, compares a first estimation dividing line estimated by the first dividing line position estimation section 13 with a second estimation dividing line estimated by the second dividing line position estimation section 14 to select an appropriate estimation dividing line.

In the case where one dividing line cannot be detected by the dividing line detection section 2, the first dividing line position estimation section 13 provides a first estimation dividing line estimated with use of the position of the other dividing line. In this case, the first estimation dividing line is estimated based on a lane width, which was calculated while the dividing lines on both sides could be detected by the dividing line detection section 2, and based on the position of the other dividing line. More specifically, the first dividing line position estimation section 13 calculates the lane width while the dividing lines on both sides in a vehicle width direction can be detected by the dividing line detection section 2, and estimates the first estimation dividing line based on the lane width and the position of the other dividing line.

In the case where one dividing line cannot be detected by the dividing line detection section 2, the second dividing line position estimation section 14 provides a second estimation dividing line estimated with use of the position of the one dividing line prior to non-detection stored in the dividing line position storage section 3. While a general method of providing the second estimation dividing line is to extrapolate a line with use of a plurality of the positions of the one dividing line stored in time series, estimation precision is enhanced by estimating the line in consideration of a travel locus of the vehicle which is calculated with use of a rudder angle and a vehicle speed.

The departure determination section 9 determines whether or not the vehicle departs from the dividing lines based on the past dividing line positions including a current position stored on the dividing line position storage section 3 and based on the dividing line positions estimated by the dividing line position estimation section 8. It is to be noted that lane departure determination is assumed to be performed in compliance with JIS standard (JIS D 0804) or ISO standard (ISO/DIS 17361).

The warning generation section 10 outputs a warning signal to the external warning sound generation section 11 and warning display section 12 with use of such communication means as an in-vehicle LAN and an exclusive line when the departure determination section 9 determines that the vehicle departs from the dividing lines and when no warning suppression conditions are met. The warning suppression conditions in this case include a blinker being in operation, being in a predetermined time after the end of blinker operation (in 2 seconds for example), and a vehicle speed being equal to or less than a specified value (70 km/h or less for example).

Examples of the warning sound generation section 11 include a speaker which gives warning to a driver by sound in response to a warning signal outputted from the warning generation section 10. Examples of the warning display section 12 include a display, a meter panel, and a warning light for giving visual warning to a driver in response to a warning signal outputted from the warning generation section 10.

It is to be noted that the image pickup device 1, the lane departure warning apparatus 100, the warning sound generation section 11, and the warning display section 12 may constitute a lane departure warning system.

A description will now be given of the processing details of the lane departure warning apparatus 100.

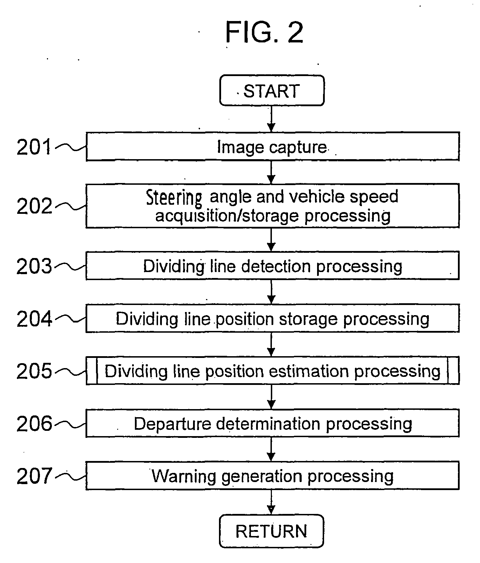

FIG. 2 is a flow chart showing the processing details of the lane departure warning apparatus 100.

First, in a processing step 201, an image picked up with the image pickup device 1 is digital-processed and captured as image data. In the case where an image has already been digital-processed into image data by the image pickup device 1, the image data is directly captured.

Next, in a processing step 202, a rudder angle and a vehicle speed are respectively acquired from a rudder sensor and a vehicle speed sensor with use of such communication means as an in-vehicle LAN, and a plurality of past values (past 200 values for example) are stored in a memory such as a RAM inside computer.

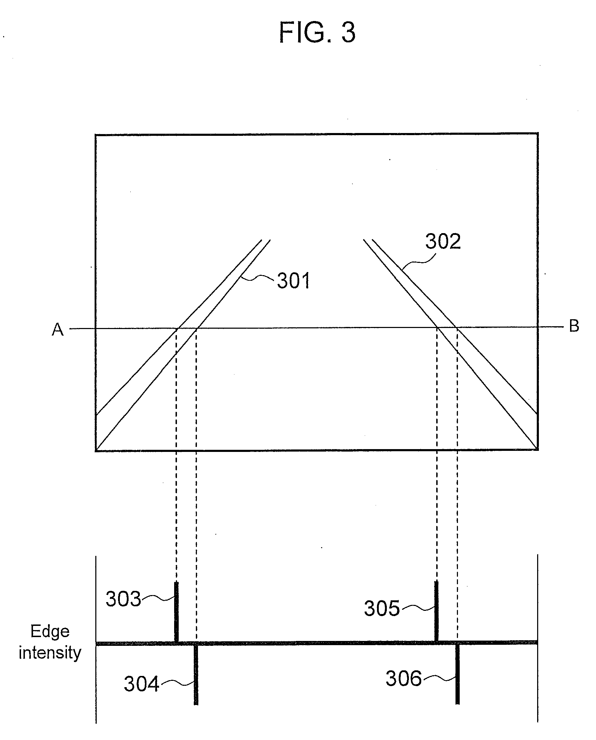

Next, in a processing step 203, dividing lines painted on the road are detected from the image data captured in the processing step 201 by the dividing line detection section 2. A concrete method of the processing for detecting the dividing lines will be described with reference to FIG. 3.

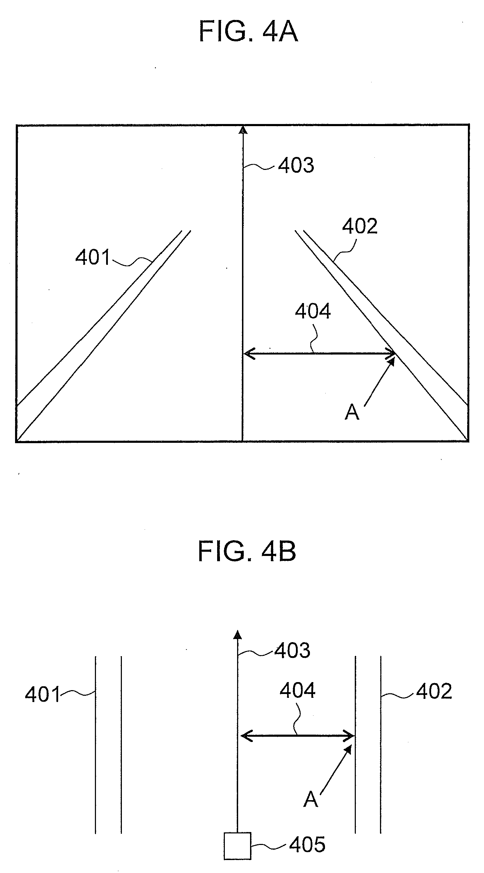

FIG. 3 shows image data captured in the processing step 201, which includes two dividing lines 301 and 302. In one method for detecting the dividing lines, edge intensity in an image is calculated to extract dividing lines. The term "edge" is herein used to refer to a point where a rapid change in luminance value is seen in the image. Graph shown below the image data in FIG. 3 shows the result of detecting the edge intensity from point A to point B in FIG. 3, in which peaks 303 and 305 represent the points of change from the road to a dividing line (the points of rapid change in luminance value from darkness to brightness) while peaks 304 and 306 represent the points of change from a dividing line to the road (the points of rapid change in luminance value from brightness to darkness). Thus, detection of dividing lines can be achieved by finding a combination of the peaks 303 and 304 and a combination of the peaks 305 and 306. A distance between a dividing line and an optical axis of the image pickup device 1 (a distance to a dividing line) is calculated. A concrete method of the processing for calculating the distance to a dividing line will be described with reference to FIG. 4.

FIG. 4A shows image data captured in the processing step 201 as in FIG. 3, and FIG. 4B is an overhead view showing the same situation as in FIG. 4A. In these drawings, two dividing lines 401 and 402 are present, with an arrow 403 representing an optical axis of the image pickup device 1 and a reference sign 405 denoting the image pickup device 1. For example, a distance to the dividing line 402 as shown with the arrow 404, which is a distance from an optical axis 403 to the point A in the dividing line 402, is calculated by obtaining a coordinate of the point A on FIG. 4A from the peaks of edge intensity and by converting the coordinate into an actual coordinate system of FIG. 4B. It is to be noted that the distance to the dividing line may be obtained not with use of the inner coordinate of the dividing line but with use of an outer coordinate or a central coordinate of the dividing line as long as definition of the distance is consistent. Moreover, instead of calculating one distance for each dividing line, a plurality of distances (10 distances for example) may be calculated for each dividing line.

Next, in a processing step 204, the position of the dividing line detected in the processing step 203 is stored in a RAM inside computer by the dividing line position storage section 3. In this case, a plurality of past processing results (past 100 results for example) are to be stored.

Next, in a processing step 205, a dividing line position is estimated by the dividing line position estimation section 8 with use of information on past dividing line positions stored in the processing step 204 as well as the rudder angle and the vehicle speed.

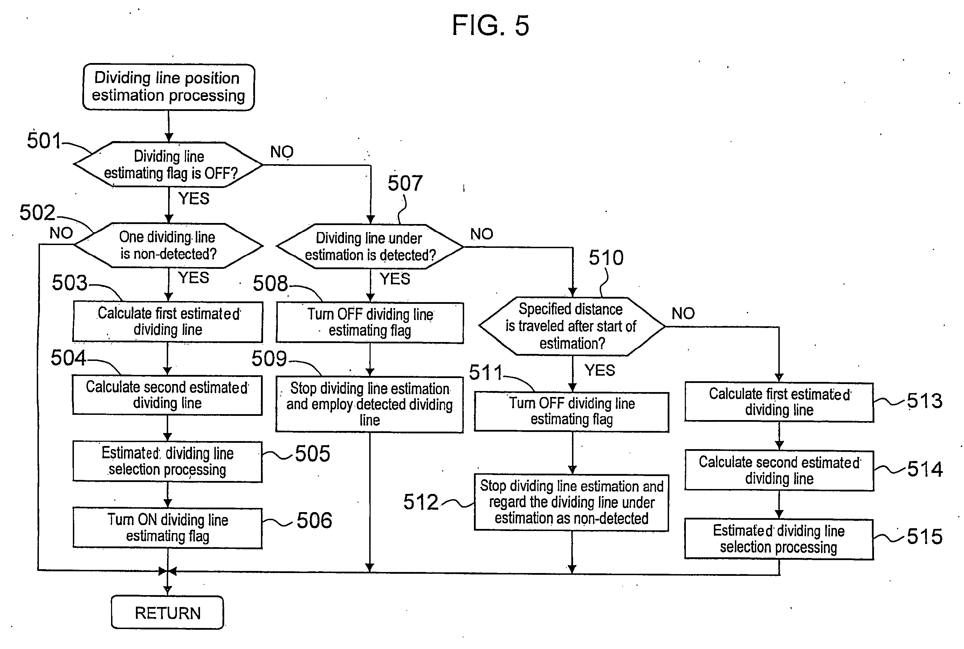

Concrete processing details will be described with reference to the flow chart of FIG. 5.

First, in a processing step 501, it is determined whether or not a dividing line is now under estimation from the state of a dividing line estimating flag, and if the dividing line is not under estimation (dividing line estimating flag is OFF), then the flow proceeds to a processing step 502, whereas if the dividing line is under estimation (dividing line estimating flag is ON), then the flow proceeds to a processing step 507.

In the processing step 502, it is determined whether or not one dividing line is non-detected, and if the one dividing line is non-detected, then the flow proceeds to a processing step 503, whereas if the one dividing line is not non-detected, then a series of processing steps are ended.

In the processing step 503, a first estimation dividing line is calculated and in a processing step 504, a second estimation dividing line is calculated.

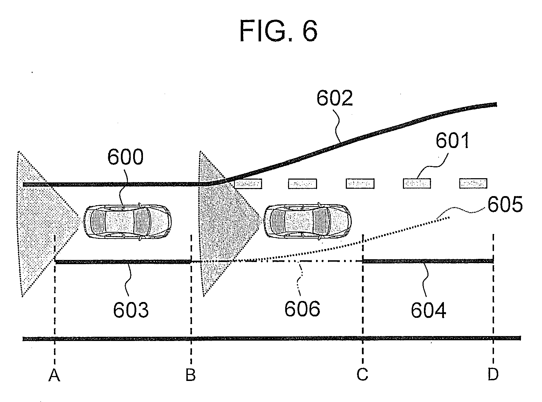

A concrete example of the method for calculating the first estimation dividing line and the second estimation dividing line will be described with reference to FIG. 6.

FIG. 6 is a view assuming the case where a branch road is present on the left-hand side of a two-lane section in a four-lane road and a vehicle 600 travels straight in the left-hand lane of the two-lane section. In the drawing, dividing lines indicating road boundary are painted with solid lines, dividing lines indicating lane boundary are painted with dashed lines, and dividing lines for dividing the two-lane section and the branch road are painted with thick dotted lines. A thick dotted line paint 601 is undetectable in image recognition due to fading and the like. An image pickup device mounted on the vehicle is to pick up images on the rear side of the vehicle.

In FIG. 6, before the vehicle 600 comes to a portion of the branch road, a lane width of the lane on which the vehicle 600 is traveling is calculated while the dividing lines on both sides are detectable, and when the vehicle passed the point B and the dashed line paint 603 vanished, a first estimation dividing line is calculated as shown with an estimation line 605 based on the result of detection of the left-hand side dividing line (detection of the solid line 602 in this case) with consideration to the lane width. More specifically, based on the position of the left-hand side dividing line 602 that is the other dividing line, the estimation line 605 corresponding to non-detected one dividing line is estimated as the first estimation dividing line.

When the vehicle passed the point B and the dashed line paint 603 vanished, a second estimation dividing line is calculated by extrapolating an estimation line 606 based on information on the position of the dashed line paint 603 detected prior to the point B. More specifically, based on the position of the dashed line paint 603 that is one dividing line prior to non-detection stored in the dividing line position storage section 3, the estimation line 606 corresponding to the non-detected one dividing line is estimated as a second estimation dividing line.

Next, in a processing step 505, the first estimation dividing line and the second estimation dividing line are compared to select an estimation dividing line for use in departure determination (estimation dividing line for departure determination).

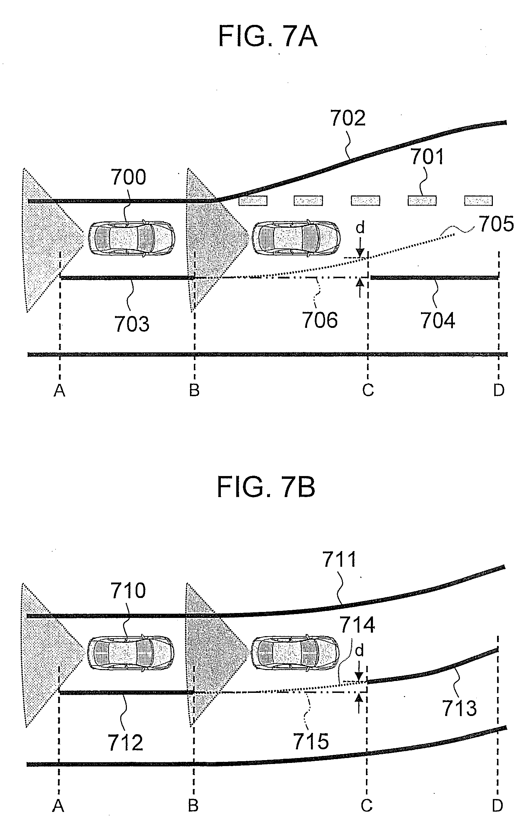

A concrete example of a method for selecting an estimation dividing line will be described with reference to FIG. 7.

FIG. 7A shows the same situation as described in FIG. 6, while FIG. 7B is a view assuming the case where a vehicle 710 travels on a left-hand lane of the two-lane section in a four-lane road. In the drawings, dividing lines indicating road boundary are shown with solid lines, dividing lines indicating lane boundary are shown with dashed lines, and an image pickup device mounted on the vehicle picks up images on the rear side of the vehicle.

In FIG. 7A, a first estimation dividing line 705 and a second estimation dividing line 706 calculated in the processing step 503 and the processing step 504 are started to be calculated at the point B where a dashed line paint 703 is discontinued (i.e., at the point where the dashed line paint 703 representing one dividing line becomes non-detected), and at the point C that is distanced by a specified travel distance (at the point where detection of the dashed line paint 704 is restarted in this case), a difference d is calculated.

The difference d is a clearance between the second estimation dividing line 706 and the first estimation dividing line 705 at the point C. In this case, if the difference d is larger than a threshold, the second estimation dividing line 706 is selected as an estimation dividing line for departure determination, whereas if the difference d is equal to or less than the threshold, the first estimation dividing line 705 is selected as the estimation dividing line for departure determination.

In the example shown in FIG. 7A, the difference d is larger than the threshold and so the second estimation dividing line 706 is selected as the estimation dividing line for departure determination. Therefore, even when the vehicle 700 comes closer to the first estimation dividing line 705, it is determined in a later-described processing step 206 for departure processing determination that the vehicle does not depart from the lane, and so a warning signal is not outputted in a processing step 207 for warning generation processing.

In FIG. 7A as in FIG. 7B, a first estimation dividing line 714 and a second estimation dividing line 715 calculated in the processing step 503 and the processing step 504 are started to be calculated at the point B where a dashed line paint 712 is discontinued (i.e., at the point where the dashed line paint 712 representing one dividing line becomes non-detected), and at the point C that is distanced by a specified travel distance (at the point where detection of the dashed line paint 713 is restarted in this case), a difference d is calculated.

The difference d is a clearance between the second estimation dividing line 715 and the first estimation dividing line 714 at the point C. In this case, if the difference d is larger than a specified value, the second estimation dividing line 715 is selected as an estimation dividing line for departure determination, whereas if the difference d is equal to or less than the specified value, the first estimation dividing line 714 is selected as the estimation dividing line for departure determination.

In the example shown in FIG. 7B, the difference d is equal to or less than a threshold and so the first estimation dividing line 714 is selected as an estimation dividing line for departure determination. Therefore, as the vehicle 700 comes closer to the first estimation dividing line 714, it is determined in the later-described processing step 206 for departure processing determination that the vehicle departs from the lane, and so a warning signal is outputted in the processing step 207 for warning generation processing.

The two specified values mentioned in FIG. 7 will now be described more specifically.

First, since this apparatus is assumed to conform to JIS standard (JIS D 0804) or ISO standard (ISO/DIS 17361), it is necessary to pass the tests stipulated by each standards. One of the tests is a reproducibility test, which is prescribed to be passed by fulfilling a condition of "a warning issued within an area 30 cm wide", and therefore it is necessary to keep an error of warning generation position within 30 cm. For example in FIG. 7A, the first estimation dividing line 705 is formed by incorrect estimation, and if a distance between the first estimation dividing line 705 and the second estimation dividing line 706 is 30 cm or more and departure determination is performed with use of this first estimation dividing line 705, a warning generation position has an error of 30 cm or more as a result. To solve this problem, the difference d at the point C where detection of the dashed line paint 704 is restarted may be set at 30 cm or less, that is, the threshold of the difference d may be set at 30 cm for example. In consideration of an operation error and the like, the threshold of the difference d may be set at 25 cm for example, or may take a value of system specific parameter.

The specified distance from the point B to the point C in FIG. 7, which is prescribed in the standards (guidelines) concerning road construction and improvement of each country, is 12 m for the highways in Japan for example, 8 m in the U.S., 7.5 m in Italy, and 9 m in China. It is thus preferable to switch the parameter according to where the system is used.

Next, in a processing step 506, the dividing line estimating flag is turned ON and a series of processing steps are ended.

Next, in the processing step 507, if a dividing line under estimation was detected and a difference between the position of the dividing line under estimation and the position of a detected dividing line is equal to or less than a specified value ($\pm 0.3$ m or less for example), then the flow proceeds to a processing step 508, whereas in other cases, the flow proceeds to a processing step 510.

In the processing step 508, the dividing line estimating flag is turned OFF, and in a processing step 509, estimation of a dividing line is stopped and a processing target is switched to a newly detected dividing line before a series of processing steps are ended.

More specifically, in the case where one dividing line is detected by the dividing line detection section 2 during estimation of the one dividing line in the processing step 507 to the processing step 509, the estimation is stopped and the position of the detected one dividing line is employed if the position of the detected one dividing line and the position of the estimation dividing line for departure determination are within a specified range. If the position of the detected one dividing line and the position of the estimation dividing line for departure determination are out of the specified range, then the estimation is continued and processing for employing the position of a selected estimation dividing line for departure determination is performed.

In the example shown in FIG. 7A for example, when the dashed line paint 704 is detected by the dividing line detection section 2 in the state where the estimation dividing line for departure determination 706 is being employed as one dividing line, the estimation is stopped and the position of the detected dashed line paint 704 is employed if the detected position of the dashed line paint 704 and the position of the estimation dividing line for departure determination 706 are in a specified range, so that determination of lane departure is conducted based on the position of the dashed line paint 704.

Next, in the processing step 510, it is determined whether or not a specified distance or more was traveled after start of the estimation of a dividing line, and if the specified distance or more was traveled (e.g., 20 m or more), then the flow proceeds to a processing step 511, whereas if the specified distance or more was not traveled, the flow proceeds to the processing step 513 to the processing step 515 for continuing the estimation processing of the dividing line before ending a series of processing steps.

In the processing step 511, the dividing line estimating flag is turned OFF, and in a processing step 512, estimation of the dividing line is stopped and the dividing line under estimation is regarded as non-detected before a series of processing steps are ended. More specifically, in the processing step 510 to the processing step 512, processing for stopping estimation is performed if one dividing line could not be detected by the dividing line detection section 2 in a specified travel distance from the start of the estimation. In the example shown in FIG. 7A for example, estimation of a dividing line is started at the point B, and if the dashed line paint 704 could not be detected by the dividing line detection section 2 till the vehicle passes the point C, estimation of the dividing line is stopped.

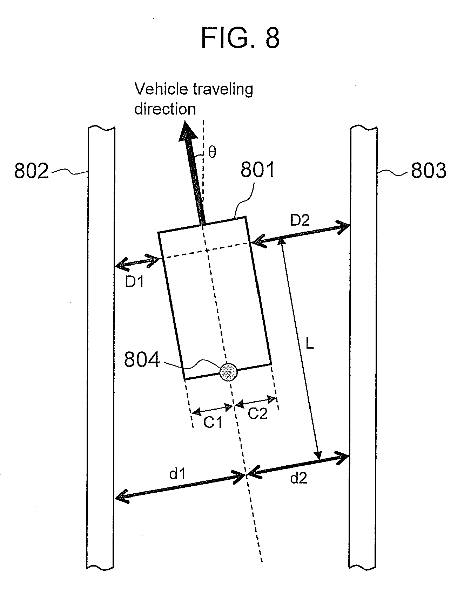

Next, in the processing step 206, departure determination processing is performed for determining whether or not the vehicle departs based on a distance between the dividing line detected in the processing step 203 and the dividing line estimated in the processing step 205. In the JIS standard (JIS D 0804) and the ISO standard (ISO/DIS 17361), generation of a warning is determined based on a distance from the outside of a front wheel of a vehicle to a dividing line, and therefore a distance to the dividing line detected from the images on the rear side of the vehicle which were picked up with the image pickup device 1 needs to be corrected to a distance from the outside of a front wheel of the vehicle to the dividing line. A more specific description will be given with reference to FIG. 8.

FIG. 8 is a view assuming the case where a vehicle 801 travels on the road with two dividing lines 802 and 803.

A distance d1 to a left dividing line 802 calculated with an image pickup device 804 placed on the rear side of the vehicle can be corrected to a distance D1 between the outside of a left-side front wheel of the vehicle and a left dividing line (distance to the dividing line after correction) with use of an equation (1):

$$D1 = d1 - L * \tan\theta - C1 \qquad (1)$$

wherein L represents a distance from the point where the distance d1 is calculated to a front wheel of the vehicle, C1 represents a distance from the image pickup device 804 to the outside of the left-side front wheel of the vehicle, and θ represents a yaw angle of the vehicle.

Similarly, a distance d2 to a right dividing line 803 calculated with the image pickup device 804 placed on the rear side of the vehicle can be corrected to a distance D2 between the outside of a right-side front wheel of the vehicle and a right dividing line (distance to the dividing line after correction) with use of an equation (2):

$$D2 = d2 + L * \tan\theta - C2 \qquad (2)$$

wherein L represents a distance from the point where the distance d2 is calculated to a front wheel of the vehicle, C2 represents a distance from the image pickup device 804 to the outside of the right-side front wheel of the vehicle, and θ represents a yaw angle of the vehicle.

The departure determination section 9 determines whether or not the vehicle departs from a lane with use of the distances D1 and D2 to the right and left dividing lines obtained by the above-mentioned equations (1) and (2). More specifically, departure is determined when the distance D1 or D2 is equal to or less than a specified value (5 cm or less for example).

The yaw angle of the vehicle θ is obtained by methods such as a method for obtaining the angle with a least-square technique from the information on a plurality of past values of the distances d1 and d2 to the right and left dividing lines and a method for obtaining the angle of the dividing lines directly from one pickup image.

Finally, in the processing step 207, warning generation processing for outputting a warning signal is performed in the warning generation section 10 when departure from the dividing line is determined in the processing step 206, and a series of processing steps are ended. The warning may be canceled at the timing after the lapse of a specified time upon generation of a warning (after the lapse of 2 seconds for example).

Although the rudder angle was selected as a parameter indicating the turn of the vehicle in this embodiment, a yaw rate may be used instead as a parameter for directly indicating the turning amount of the vehicle, and in that case, information on the yaw rate may be acquired from output values of a yaw rate sensor.

As described above, an error in image recognition can be determined with use of the information on image recognition and features of road structure so that appropriate estimation of dividing lines can be achieved, and thereby false warnings and absence of a warning can be prevented.

<Second Embodiment>

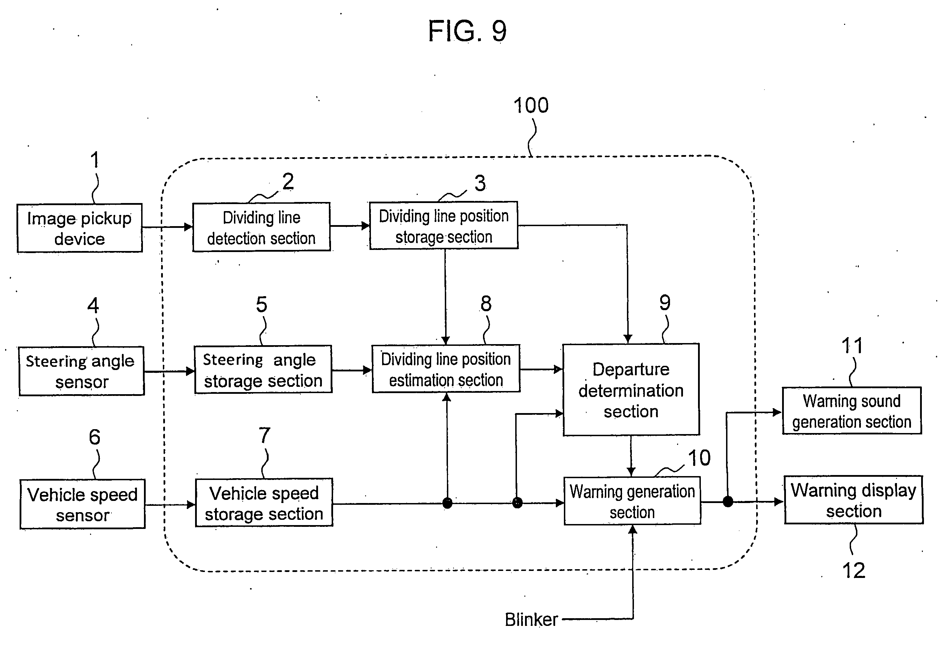

FIG. 9 is a schematic view of a lane departure warning apparatus 100 according to a second embodiment.

The lane departure warning apparatus 100 in FIG. 9 has a structure similar to the structure of the first embodiment (FIG. 1) except for the first dividing line position estimation section 13 and the second dividing line position estimation section 14 being removed.

A description will now be given of the processing details of the lane departure warning apparatus as a whole in the second embodiment.

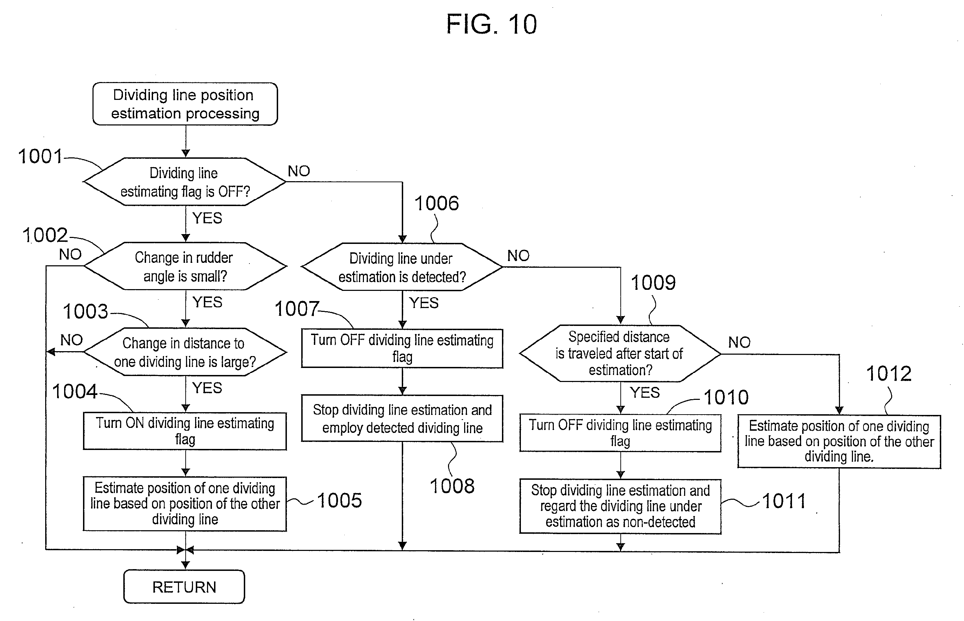

Although the flow chart indicating the processing details of the lane departure warning apparatus 100 is similar to the flow chart shown in FIG. 2, the processing step 205 for dividing line position estimation processing is different and so the processing will be described with reference to a flow chart of FIG. 10.

First, in a processing step 1001, it is determined whether or not a dividing line is now under estimation from the state of a dividing line estimating flag, and if a dividing line is not under estimation (dividing line estimating flag is OFF), then the flow proceeds to a processing step 1002, whereas if the dividing line is under estimation (dividing line estimating flag is ON), the flow proceeds to a processing step 1006.

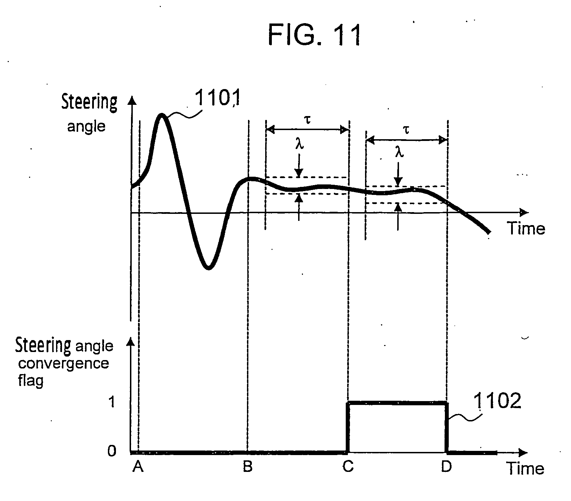

In the processing step 1002, if change in rudder angle (parameter representing the turn of the vehicle) stored in the processing step 202 in a predetermined time is smaller than a specified value (first threshold) (e.g., change of 3 degrees or less in 2 seconds), then the flow proceeds to a processing step 1003, whereas in other cases, a series of processing steps are ended. The processing flow may be structured so that if change in rudder angle (parameter representing the turn of the vehicle) stored in the processing step 202 in a specified travel distance is smaller than a specified value (first threshold) (e.g., change of 3 degrees or less in a travel distance of 50 m), then the flow proceeds to the processing step 1003, whereas in other cases, a series of processing steps are ended. The condition for proceeding to the processing step 1003 in this case is the rudder angle being almost constant, i.e., the vehicle traveling along the road during a predetermined time or in a specified travel distance. A more specific description will be given with reference to FIG. 11.

FIG. 11 is a graph view showing time variation of the rudder angle and the rudder angle convergence flag (when this flag is ON, the flow proceeds to the processing step 1003) during travel on a certain road. First, a rudder angle 1101 drastically changes up and down during a period from time A to time B, indicating high likelihood of the vehicle performing lane change or the like and indicating low likelihood of the vehicle traveling along the road, so that a rudder angle convergence flag 1102 is OFF. Then, at time C, if change in rudder angle during a period of past $\tau$ (2 seconds for example) is within $\lambda$ (3 degrees or less for example), the rudder angle convergence flag 1102 is turned ON. Then at time D when the change in rudder angle during a period of past $\tau$ is no longer within $\lambda$, the rudder angle convergence flag 1102 is turned OFF.

With such a determination method, it becomes possible to determine that the vehicle is highly likely to travel along the road when the rudder angle convergence flag is ON except for the case where road curvature continues to change. In FIG. 11, the rudder angle convergence flag 1102 can also be determined with the change in rudder angle $\lambda$ in a specified travel distance $\tau$ (50 m for example) by using a travel distance as a horizontal axis.

Although the rudder angle was selected as a parameter indicating the turn of the vehicle in this embodiment, a yaw rate may be used instead as a parameter for directly indicating the turning amount of the vehicle, and in that case, information on the yaw rate may be acquired from output values of a yaw rate sensor. In the case of adopting such a method, for example, a yaw rate sensor and a yaw rate detection section are provided in place of or in addition to the rudder sensor 4 and the rudder angle storage section 5 shown in FIG. 1.

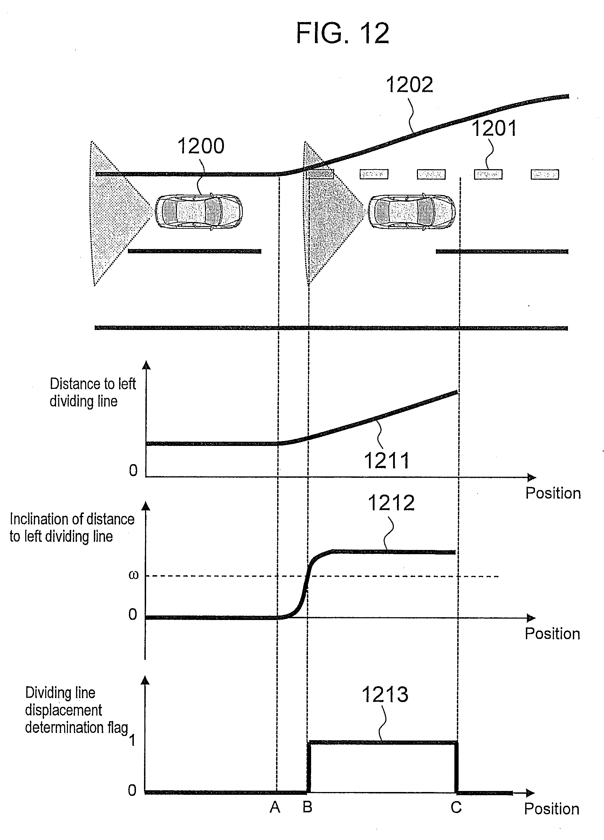

In the processing step 1003, if change in distance to one dividing line, that is, change in dividing line position (distance to the dividing line) stored in the processing step 204 in a predetermined time is equal to or more than a specified value (e.g., change of 0.15 m or more in 0.25 seconds), the flow proceeds to a processing step 1004, whereas in other cases, a series of processing steps are ended. The processing flow may be structured so that if the change in distance to one dividing line that is change in dividing line position (distance to the dividing line) stored in the processing step 204 in a specified travel distance is equal to or more than a specified value (e.g., change of 0.03 m or more in a travel distance of 1.2 m), then the flow proceeds to a processing step 1004, whereas in other cases, a series of processing steps are ended. A more specific description will be given with reference to FIG. 12.

FIG. 12 is a view assuming the case where a branch road is present on the left-hand side of the two-lane section in a four-lane road and a vehicle 1200 travels straight in the left-hand lane of the two-lane section. In the drawing, dividing lines indicating road boundary are painted with solid lines, dividing lines indicating lane boundary are painted with dashed lines, and dividing lines for dividing the two-lane section and the branch road are painted with thick dotted lines. A thick dotted line paint 1201 is undetectable in image recognition due to fading and the like. An image pickup device mounted on the vehicle is to pick up images on the rear side of the vehicle. Graphs shown below the road state shown in FIG. 12 respectively indicate change in measurement value of a distance to the left dividing line, change in inclination of distance to the left dividing line (change amount in distance), and change in dividing line displacement determination flag (if this flag is ON, the flow proceeds to a processing step 1004).

In FIG. 12, since the dividing line detection section 2 cannot detect the thick dotted line paint 1201 after the vehicle 1200 passed the point A, the dividing line detection section 2 starts to detect a road boundary line 1202 of the branch road for recognition of the left-hand side dividing line. Therefore, a distance to the left dividing line changes as shown with a solid line 1211 in a graph shown in FIG. 12.

Next, the inclination of distance is calculated with use of the distance 1211 to the left dividing line, and the result thereof indicates that the inclination rapidly rises after the point A and changes to take a constant value after passing the point B as shown with a solid line 1212. The inclination 1212 is calculated by methods such as a method for obtaining the inclination with a least-square technique from past measurement values in a plurality of points, a method of calculating the inclination based on a difference from the previous measurement values, and a method of directly calculating the inclination of a dividing line from one image.

Next, if the inclination 1212 of the distance to the left dividing line when the vehicle 1200 arrives at the point B is equal to or more than a second threshold $\omega$ (e.g., 0.6 or more with a horizontal axis being time and 0.025 or more with a horizontal axis being travel distance), the dividing line displacement determination flag is turned ON. The dividing line displacement determination flag is turned OFF at the time when the vehicle 1200 arrives at the point C and the left dividing line is no longer detectable (because the dividing line 1202 moves away from the vehicle 1200).

Other conditions for turning OFF the dividing line displacement determination flag include the dividing line being detected in a normal position (e.g., the sum total of a distance to the right dividing line and a distance to the left dividing line being closer to a prefixed lane width).

Although the method for determining dividing line displacement with use of inclination of distance to a dividing line has been described, the dividing line displacement may be determined with use of a speed at which a dividing line moves away from the vehicle. Moreover, the second threshold $\omega$ may be set as a value which varies in response to the vehicle speed.

In the processing step 1004, since one dividing line is determined to be moving away from the vehicle from the determination results in the processing step 1002 and the processing step 1003 though the vehicle is traveling along the road in actuality, the dividing line estimating flag is turned on, and the position of one dividing line is estimated based on the position of the other dividing line in a processing step 1005.

A specific method for estimating the position of a dividing line in this case is switched depending on the detection state of the other dividing line. First, in the case where the other dividing line is being detected, a lane width is calculated at the position before one dividing line moves away from the vehicle, and the position of one dividing line is estimated with use of the other dividing line and the lane width. In the case where the other dividing line is non-detected due to an interval between dashed lines and the like, the position of one dividing line is similarly estimated with use of the lane width, though in this case, the position of the other dividing line for use as a reference is obtained through extrapolation based on the past dividing line positions.

Next, in the processing step 1006, if a dividing line under estimation was detected and a difference between the position of the dividing line under estimation and the position of the detected dividing line is equal to or less than a specified value ($\pm 0.3$ m or less for example), then the flow proceeds to a processing step 1007, whereas if not, the flow proceeds to a processing step 1009.

In the processing step 1007, the dividing line estimating flag is turned OFF, and in a processing step 1008, estimation of the dividing line is stopped and a processing target is switched to a newly detected dividing line before a series of processing steps are ended.

More specifically, in the case where one dividing line was detected by the dividing line detection section 2 during estimation of the one dividing line in the processing step 1006 to the processing step 1008, the estimation is stopped and the position of the detected one dividing line is employed if the position of the detected one dividing line and the position of the estimation dividing line for departure determination are within a specified range. If the position of the detected one dividing line and the position of the estimation dividing line for departure determination are out of the specified range, then the estimation is continued and processing for employing the position of a selected estimation dividing line for departure determination is performed.

Next, in the processing step 1009, it is determined whether or not a specified distance or more was traveled after start of the estimation of the dividing line, and if the specified distance or more was traveled (e.g., 20 m or more), then the flow proceeds to a processing step 1010, whereas if the specified distance or more was not traveled, the flow proceeds to a processing step 1012 for continuing the estimation processing of the dividing line before ending a series of processing steps.

In the processing step 1010, the dividing line estimating flag is turned OFF, and in a processing step 1011, estimation of the dividing line is stopped and the dividing line under estimation is regarded as non-detected before a series of processing steps are ended. More specifically, in the processing step 1009 to the processing step 1011, processing for stopping estimation is performed if one dividing line could not be detected by the dividing line detection section 2 in a specified travel distance from start of the estimation.

As described above, an image recognition error can be determined with use of a combination of the rudder angle and the information on image recognition so that appropriate estimation of dividing lines can be achieved, which results in prevention of false warnings and absence of a warning.

Next, with reference to FIG. 13 to FIG. 15, the details of a series of processing steps in the lane departure warning apparatus 100 will be described with the processing steps being applied to actual road states.

FIG. 13 is a view assuming the case where a branch road is present on the left-hand side of the two-lane section in a four-lane road and a vehicle 1300 travels straight in the left-hand lane of the two-lane section. In the drawing, dividing lines indicating road boundary are painted with solid lines, dividing lines indicating lane boundary are painted with dashed lines, and dividing lines for dividing the two-lane section and the branch road are painted with thick dotted lines. A thick dotted line paint 1301 is undetectable in image recognition due to fading and the like. An image pickup device mounted on the vehicle is to pick up images on the rear side of the vehicle.

First, the processing details in the case where the present invention is not applied will be described with reference to FIG. 13.

When the vehicle 1300 passed the point B, the dashed line paint on the right-hand side breaks off and the thick dotted line 1301 on the left-hand side is undetectable, and therefore only a solid line 1302 that is a road boundary of the branch road is detected. In this case, since only the left-hand side solid line 1302 that is moving away from the vehicle is detected, a dividing line is estimated as shown with a dotted line 1303 due to a break in the right-hand side dashed line. Then, when the vehicle 1300 arrived at the point C, the vehicle 1300 departs from a right-hand side dividing line estimation position, which results in generation of a warning despite the vehicle traveling straight.

As shown above, estimating an undetectable dividing line simply with use of the information on the detected dividing line causes generation of a false warning in the places with special road geometries such as junctions, which results in giving discomfort and sense of uneasiness to the driver.

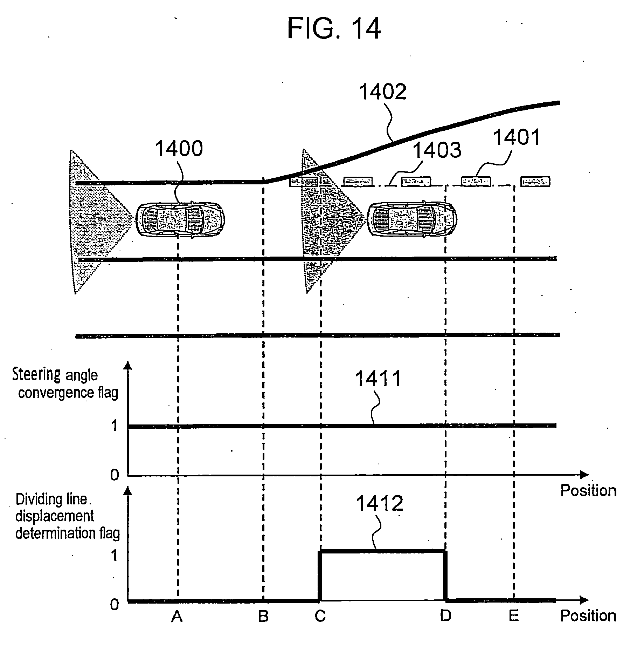

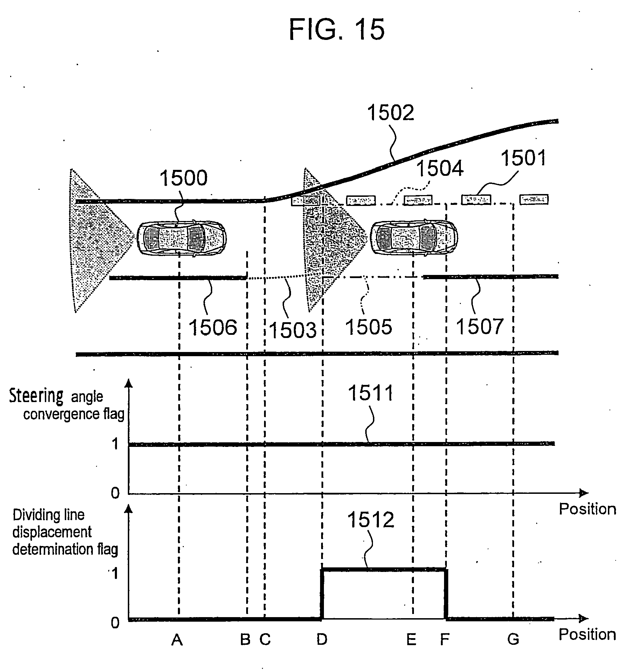

A description will now be given of the processing details in the case where the present invention is applied with reference to FIG. 14 and FIG. 15.

FIG. 14 is basically similar to FIG. 13 in the road state except that the dividing line indicating a lane boundary is a solid line. Graphs shown below the road state in FIG. 14 respectively represent change in rudder angle convergence flag and change in dividing line displacement determination flag.

First, the dividing line position estimation section 8 detects both a pair of dividing lines positioned in the vehicle width direction of a vehicle at the time when a vehicle 1400 passes the point A. Once the vehicle 1400 passed the point B, a left-hand side thick dotted line 1401 becomes undetectable, and therefore a solid line 1402 that is a road boundary of the branch road is started to be detected instead of the dotted line 1401.

In this case, since the vehicle 1400 is traveling along the road (rudder angle convergence flag 1411 is ON), the left-hand side solid line 1402 that is moving away from the vehicle is to be detected. Therefore, when a dividing line displacement determination flag 1412 is turned ON at the point C, the amount of change in parameter representing the turn of the vehicle in a specified travel distance or a specified period of time becomes smaller than a preset first threshold and the amount of change in clearance between the solid line 1402 detected by the dividing line detection section 2 and the vehicle 1400 becomes equal to or larger than a preset second threshold, so that the detection result of a left-hand side dividing line is determined to be incorrect, and consequently the left-hand side dividing line 1403 (estimation dividing line for departure determination that is a dividing line with a larger amount of change in clearance to the vehicle) is estimated from the position of a dividing line on the right-hand side of the vehicle (position of the dividing line with a smaller amount of change in clearance to the vehicle). In this case, the dividing line is estimated by such a method including the step of calculating a lane width at the point A where the dividing lines on both sides are normally detectable and the step of estimating one-side dividing line based on a dividing line on the opposite side with use of the calculated lane width.

When the vehicle 1400 arrived at point E, a travel distance from the point C where estimation of dividing lines was started becomes equal to or more than a specified value, so that estimation of the left-hand side dividing line 1403 is stopped. In the case where the vehicle 1400 departs from the left-hand side dividing line 1403 under estimation during traveling from the point C to the point E, a warning is issued by the warning generation section 10.

As described above, even in the case of special road geometries such as junctions, the validity of the detection results of dividing lines can be determined, and when a detection result is determined as false detection of a dividing line, the dividing line on the false detection side can be estimated based on the position of a dividing line on the opposite side of the dividing line on the false detection side.

FIG. 15 shows a road state similar to that in FIG. 13 and graphs therein are similar to those described in FIG. 14.

First, when a vehicle 1500 passed the point B, an unpainted portion of a dashed line 1506 that is a right-hand side dividing line appears and a left-hand side dividing line 1502 is still detectable, so that the right-hand side dividing line is estimated as shown with a line 1503 in the drawing based on the position of the left-hand side dividing line. Once the vehicle 1500 arrived at the point C, the dividing line detection section 2 detects a solid line 1502 of the branch road as a left-hand side dividing line, as a result of which the dividing line 1503 under estimation gradually comes closer to the vehicle 1500.

Then, when the vehicle 1500 arrived at point D and both a rudder angle convergence flag 1511 and a dividing line displacement determination flag 1512 are turned ON, the amount of change in parameter representing the turn of the vehicle in a specified travel distance or a specified period of time becomes smaller than a preset first threshold and the amount of change in clearance between the solid line 1502 detected by the dividing line detection section 2 and the vehicle 1500 becomes equal to or larger than a preset second threshold, as a result of which the detection result of the left-hand side dividing line is determined to be incorrect, and the left-hand side dividing line 1504 is estimated based on the position of a dividing line on the right-hand side of the vehicle.

In this case, since the right-hand side dividing line is under estimation as shown with the line 1503 at the point D, the position of a painted portion of the dividing line prior to the point B (position of one dividing line prior to non-detection) is stored in advance. Then, since the vehicle is traveling along the road, one dividing line (first estimation dividing line for departure determination) 1505 is first estimated from the stored right-hand side dividing line position (position of one dividing line prior to non-detection) and is extrapolated to the dashed line 1506. Then, with use of the lane width by the same method as described in FIG. 14, an opposite-side dividing line (second estimation dividing line for departure determination) 1504 is estimated.

Next, when the vehicle 1500 arrived at the point E, and the right-hand side dividing line was re-detected, estimation of the one dividing line 1505 is stopped. Further, when the vehicle 1500 arrived at a point G, a travel distance from the point D where estimation of the left-hand side dividing line was started becomes equal to or more than a specified value, so that estimation of the left-hand side dividing line 1504 is stopped. In the case where the vehicle 1500 departs from any one of the dividing lines 1503, 1505 and 1504 under estimation during traveling from the point B to the point G, a warning is issued by the warning generation section 10.

As described above, even in the case of special road geometries such as junctions, the validity of the detection results of dividing lines can be determined, and when a detection result is determined as false detection of a dividing line, the dividing line on the false detection side can be estimated based on the position of a dividing line on the opposite side of the dividing line on the false detection side.

<Third Embodiment>

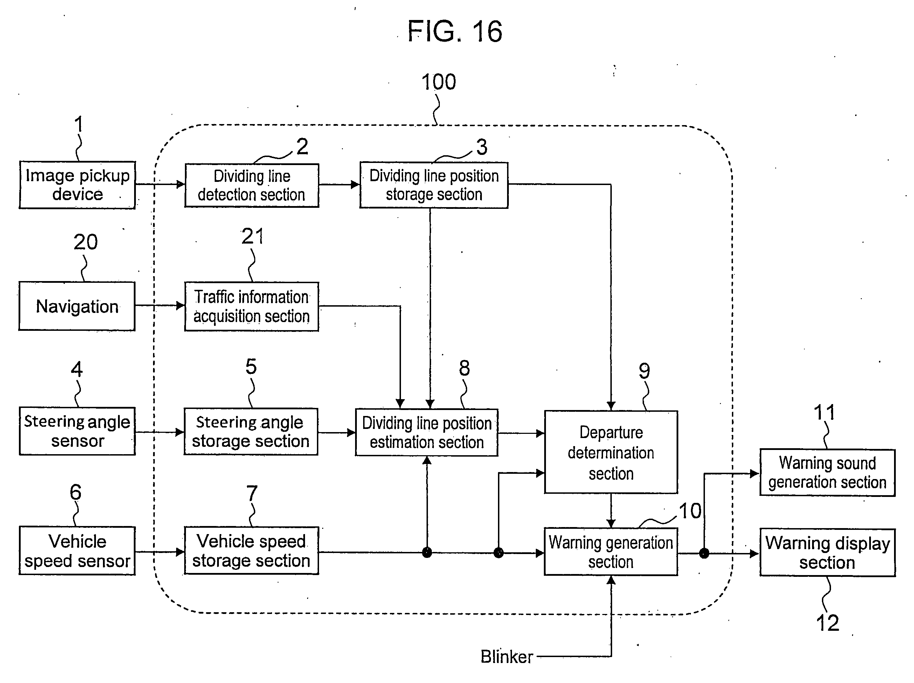

FIG. 16 is a schematic view of a lane departure warning apparatus 100 according to a third embodiment.

The lane departure warning apparatus 100 in FIG. 16 has a structure based on the structure in the second embodiment (FIG. 9) with a navigation 20 and a traffic information acquisition section 21 added thereto.

The navigation 20 is a device typified by car-navigation systems for calculating a vehicle position on a map, and since a method for calculating the vehicle position is publicly known, explanation thereof will be omitted. When special road geometries (branch roads, merging roads, tollgates, etc.) are present in a scheduled travel route near the vehicle, the navigation 20 outputs information including types of roads to the lane departure warning apparatus 100 with use of such communication means as an in-vehicle LAN.

The traffic information acquisition section 21 acquires the information inputted with such communication means as an in-vehicle LAN from the navigation 20. Concrete examples of information contents include presence of special shape roads (branch roads, merging roads, tollgates, etc.) in a scheduled travel route near the vehicle, types of special shape roads, information on branch road and merging road such as lengths of dividing lines (thick dotted lines in Japan) for dividing the roads from a main line, and tollgate information such as positions where dividing lines of lane boundary vanish and positions where roads start to widen.

A description will now be given of the processing details of the lane departure warning apparatus as a whole in the third embodiment.

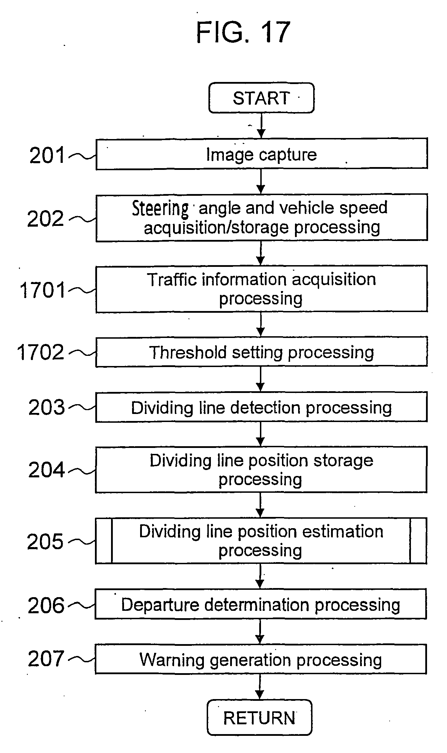

FIG. 17 is a flow chart showing the processing details of the lane departure warning apparatus 100, the flow chart being constituted by adding a processing step 1701 and a processing step 1702 to the flow chart of the second embodiment (FIG. 2).

First, in the processing step 1701, when a special shape road is present in a scheduled travel route near the vehicle, information including the type of the road is acquired from the navigation 20 with use of such communication means as an in-vehicle LAN.

Next, in the processing step 1702, the threshold of the parameter for use in the processing step 205 for dividing line position estimation processing is set up based on the traffic information acquired in the processing step 1701. More specifically, the threshold of the parameter for use in the processing step 1003 in the flow chart of the second embodiment (FIG. 10) is set up. Since the shape of the road on which the vehicle travels is unknown in the second embodiment, determination is difficult unless change in distance to one dividing line is large to some extent. Accordingly, in the processing step 1702, the threshold of change in distance to one dividing line is set to be small when a special shape road is present in a scheduled travel route near the vehicle. For example, in the case of change in dividing line position in a predetermined time, the threshold is set at 0.1 m or more change in 0.25 second (0.15 m or more change in 0.25 second in the first embodiment), while in the case of change in dividing line position in a specified travel distance, the threshold is set at 0.02 m or more change in a travel distance of 1.2 m (0.03 m or more change in a travel distance of 1.2 m in the first embodiment).

As mentioned above, when the presence of a special shape road in a scheduled travel route near the vehicle can be determined with use of the information from navigation and the like, the threshold of the parameter for determining the special shape road can be set smaller, so that determination of the special shape road can be made at an early stage as compared to the first embodiment. Further, the probability of determining special shape roads can also be enhanced.

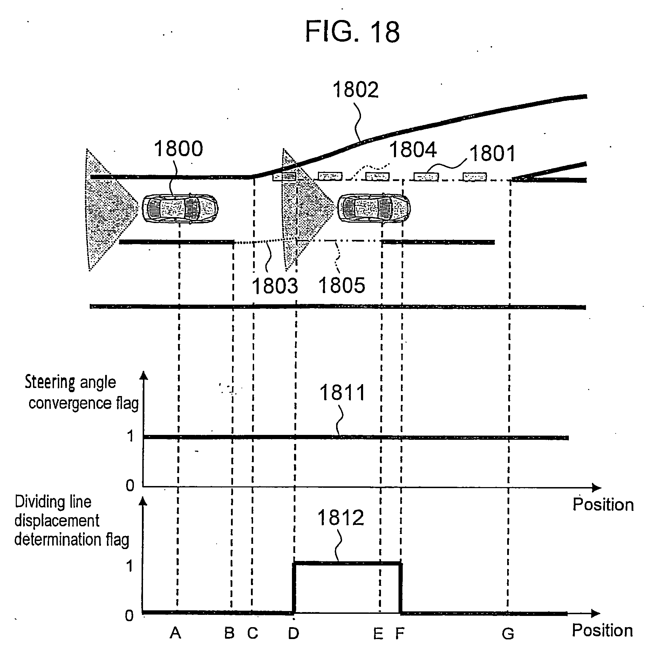

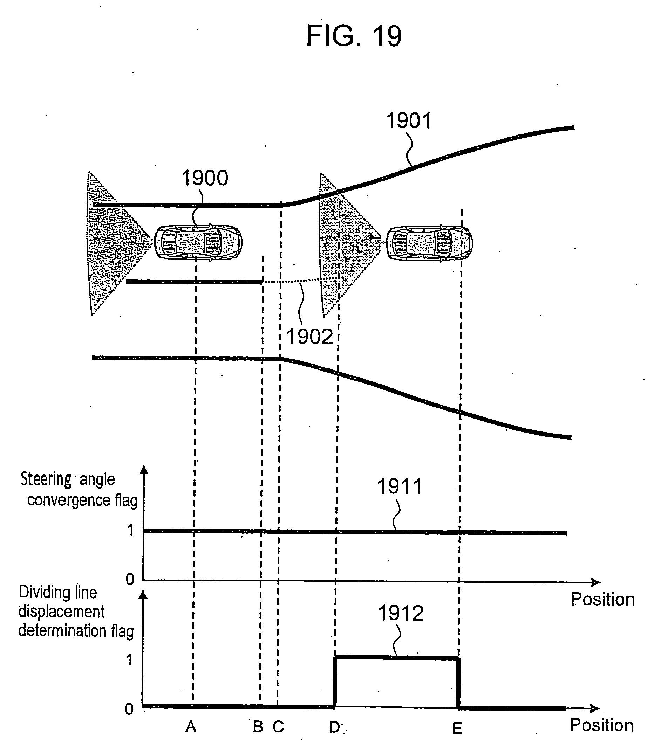

Next, with reference to FIG. 18 and FIG. 19, the details of a series of processing steps of the lane departure warning apparatus 100 will be described with the processing steps being applied to actual road states.

FIG. 18 is a view assuming the case where a branch road is present on the left-hand side of the two-lane section in a four-lane road and a vehicle 1800 travels straight in the left-hand lane of the two-lane section. In the drawing, dividing lines indicating road boundary are painted with solid lines, dividing lines indicating lane boundary are painted with dashed lines, and dividing lines for dividing the two-lane section and the branch road are painted with thick dotted lines. A thick dotted line paint 1801 is undetectable in image recognition due to fading and the like. An image pickup device mounted on the vehicle is to pick up images on the rear side of the vehicle. Graphs shown below the road state in FIG. 18 respectively represent change in rudder angle convergence flag and change in dividing line displacement determination flag.

In FIG. 18, at the point A before the vehicle 1800 arrives at the branch road, information indicating the presence of the branch road in a scheduled travel route near the vehicle is first acquired from the navigation 20. Next, when the vehicle 1800 passed the point B, an unpainted portion of a dashed line that is a right-hand side dividing line appears and a left-hand side dividing line is still detectable, so that a right-hand side dividing line is estimated as shown with a line 1803 in the drawing based on the position of the left-hand side dividing line. Once the vehicle 1800 arrived at the point C, a solid line 1802 of the branch road is detected as a left-hand side dividing line, as a result of which the dividing line 1803 under estimation gradually comes closer to the vehicle.

Then, when the vehicle 1800 arrived at the point D and a rudder angle convergence flag 1811 and a dividing line displacement determination flag 1812 were both turned ON, it is determined that the detection result of a left-hand side dividing line is incorrect, and the left-hand side dividing line 1804 is estimated from the position of a dividing line on the right-hand side of the vehicle. In this case, since the right-hand side dividing line is under estimation as shown with the line 1803 at the point D, the position of a painted portion of the dividing line prior to the point B is stored in advance, and since the vehicle is traveling along the road, a right-hand side dividing line is first extrapolated based on the stored dividing line position as shown with a line 1805, and then a dividing line on the opposite side is estimated as shown with a line 1804 by the same method as explained in FIG. 14 (method with use of lane width).

Next, when the vehicle 1800 arrived at the point E, and the right-hand side dividing line was re-detected, estimation of the line 1805 is stopped. Further, when the vehicle 1800 arrived at the point G, the left-hand side dividing line was re-detected, and therefore estimation of the left-hand side dividing line 1804 is stopped. While estimation of the left-hand side estimation dividing line 1804 is designed to be stopped after travel in a specified distance in the second embodiment, it is known in advance that the dividing line 1804 belongs to the branch road in the present embodiment, so that estimation is designed to be continued until the left-hand side dividing line is re-detected. However, since there is a possibility that the information from the navigation 20 is incorrect, estimation may be stopped after travel of, for example, 200 m. In the case where the vehicle 1800 departs from any one of the dividing lines 1803, 1805 and 1804 under estimation during traveling from the point B to the point G, a warning is issued by the warning generation section 10.

As described above, even in the case of special road geometries such as junctions, the validity of the detection results of dividing lines can be determined, and when a detection result is determined as false detection of a dividing line, the dividing line on the false detection side can be estimated based on the position of a dividing line on the opposite side of the dividing line on the false detection side. Moreover, prior knowledge that the vehicle passes a special shape road allows early and reliable determination of false detection, and allows stable estimation of dividing lines.

FIG. 19 is a view assuming the case where a vehicle 1900 travels straight in the left-hand lane of a two-lane section in a four-lane road whose road width is widened in front of a tollgate. In the drawing, dividing lines indicating road boundary are painted with solid lines, and dividing lines indicating lane boundary are painted with dashed lines. An image pickup device mounted on the vehicle is to pick up images on the rear side of the vehicle. Graphs shown below the road state in FIG. 19 respectively represent change in rudder angle convergence flag and change in dividing line displacement determination flag.

In FIG. 19, at the point A before the vehicle 1900 arrives at a branch road, information indicating that the road is widened due to the presence of a tollgate in a scheduled travel route near the vehicle is first acquired from the navigation 20. Next, when the vehicle 1900 passed the point B, an unpainted portion of a dashed line that is a right-hand side dividing line appears and a left-hand side dividing line is still detectable, so that a right-hand side dividing line is estimated as shown with a line 1902 in the drawing based on the position of the left-hand side dividing line. Once the vehicle 1900 arrived at the point C, a solid line 1901 of the branch road is detected as a left-hand side dividing line, as a result of which the dividing line 1902 under estimation gradually comes closer to the vehicle.

Then, when the vehicle 1900 arrived at the point D and a rudder angle convergence flag 1911 and a dividing line displacement determination flag 1912 were both turned ON, it is determined that the left-hand side dividing line is moving away due to the widened road, and so the estimation of the left-hand side dividing line 1902 is stopped.

Thus, even in the places with special road geometries such as in front of tollgates, it becomes possible to determine sudden widening of the road from the detection results of dividing lines and to prevent incorrect estimation of the dividing lines, so that false warnings can be prevented.

As described above, it becomes possible to prevent incorrect estimation of the dividing lines by determining whether or not the vehicle travels along the road from the information on the rudder angle and the yaw rate of the vehicle and by determining whether or not the road is a special shape road from the change in distance to a dividing line, so that false warnings can be prevented. It also becomes possible to prevent absence of a warning by estimating correct dividing lines. Therefore, since false warnings and absence of a warning can be prevented, it becomes possible to provide a lane departure warning apparatus which does not give discomfort to a driver.

Although descriptions have been given with use of the image pickup device which picks up images on the rear side of the vehicle in this embodiment, an image pickup device which picks up images on the front side of the vehicle may be used and a mounting position and the like of the image pickup device may be different from those in this embodiment.

Although the above description has been given with regard to a lane departure warning apparatus, the present invention also relates to a lane departure warning method comprising the steps carried out by the lane departure warning apparatus.

As disclosed above, the present invention can be embodied in various forms without departing from the scope thereof.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

DESCRIPTION OF SYMBOLS

| 1 | image pickup device |
|---|---|
| 2 | dividing line detection section |
| 3 | dividing line position storage section |
| 4 | rudder angle sensor |
| 5 | rudder angle storage section |
| 6 | vehicle speed sensor |
| 7 | vehicle speed storage section |
| 8 | dividing line position estimation section |
| 9 | departure determination section |
| 10 | warning generation section |
| 11 | warning sound generation section |
| 12 | warning display section |
| 100 | lane departure warning apparatus |

**Claims**

1. A lane departure warning apparatus (100) for determining whether or not a vehicle departs from a lane based on images of outside of the vehicle picked up during travel with an image pickup device (1) which picks up images of the outside of the vehicle and outputting a warning signal upon determination of departure, comprising:

   a dividing line detection section (2) for detecting dividing lines of a lane on which the vehicle is travelling based on the images;
   a dividing line position storage section (3) for storing positions of the dividing lines detected by the dividing line detection section (2);
   a dividing line position estimation section (8) for estimating, when one dividing line out of a pair of dividing lines positioned on both sides of a vehicle width direction of the vehicle is non-detected, the one dividing line based on a position of the other dividing line as a first estimated dividing line, estimating the non-detected one dividing line as a second estimated dividing line based on a position of the one dividing line prior to non-detection stored in the dividing line position storage section (3), and comparing a position of the first estimated dividing line with a position of the second estimated dividing line to select either one of the first estimated dividing line and the second estimated dividing line as an estimated dividing line for departure determination; and
   a departure determination section (9) for determining whether or not the vehicle departs from the lane based on a position of the estimated dividing line for departure determination selected by the dividing line position estimation section (8).

2. The lane departure warning apparatus (100) according to claim 1, wherein
   the dividing line position estimation section (8) selects either one of the first estimated dividing line and the second estimated dividing line as an estimated dividing line for departure determination based on a clearance between the first estimated dividing line and the second estimated dividing line at a point distanced by a specified travel distance from a point where the one dividing line became non-detected.

3. The lane departure warning apparatus (100) according to claim 2, wherein
the dividing line position estimation section (8) selects the first estimated dividing line as an estimated dividing line for departure determination when the clearance is equal to or less than a threshold, whereas when the clearance is larger than the threshold, the dividing line position estimation section (8) selects the second estimated dividing line as an estimated dividing line for departure determination.

4. The lane departure warning apparatus (100) according to claim 1, wherein
the dividing line position estimation section (8) calculates a travel locus of the vehicle based on a steering angle and a vehicle speed, and estimates the second estimated dividing line based on the calculated travel locus and the position of the one dividing line prior to non-detection stored in the dividing line position storage section (3).

5. The lane departure warning apparatus (100) according to claim 1, wherein
in the case where the one dividing line was detected by the dividing line detection section (2) during estimation of the one dividing line, the dividing line position estimation section (8) stops the estimation and employs a position of the detected one dividing line if the position of the detected one dividing line and a position of the estimated dividing line for departure determination are within a specified range, whereas if the position of the detected one dividing line and the position of the estimated dividing line for departure determination are out of the specified range, the dividing line position (8) estimation section continues the estimation and employs the position of the selected estimated dividing line for departure determination.

6. The lane departure warning apparatus (100) according to claim 5, wherein
the dividing line position estimation section (8) stops the estimation when the one dividing line could not be detected by the dividing line detection section (2) in a specified travel distance from start of the estimation.

7. A lane departure warning apparatus (100) for determining whether or not a vehicle departs from a lane based on images of outside of the vehicle picked up during travel with an image pickup device (1) which picks up images of the outside of the vehicle and outputting a warning signal upon determination of departure, comprising:

   a dividing line detection section (2) for detecting dividing lines of a lane on which the vehicle is travelling based on the images;
   a dividing line position storage section (3) for storing positions of the dividing lines detected by the dividing line detection section (2);
   a dividing line position estimation section (8) for estimating an estimated dividing line for departure determination based on the position of the dividing line stored in the dividing line position storage section (3) in the case where an amount of change in a parameter representing a turn of the vehicle in a specified travel distance or a specified period of time is smaller than a preset first threshold and an amount of change in a clearance between the dividing line detected by the dividing line detection section (2) and the vehicle is equal to or larger than a preset second threshold; and
   a departure determination section (9) for determining whether or not the vehicle departs from the lane based on a position of the estimated dividing line for departure determination estimated by the dividing line position estimation section (8).

8. The lane departure warning apparatus (100) according to claim 7, wherein
when both of a pair of dividing lines positioned on both sides of a vehicle width direction of the vehicle are being detected by the dividing line detection section (2), the dividing line position estimation section (8) estimates an estimated dividing line for departure determination that is a dividing line with a larger amount of change in the clearance to the vehicle based on a position of the dividing line with a smaller amount of change in the clearance to the vehicle stored in the dividing line position storage section (3).

9. The lane departure warning apparatus (100) according to claim 7, wherein
when one dividing line out of a pair of dividing lines positioned on both sides of a vehicle width direction of the vehicle is non-detected by the dividing line detection section (2), the dividing line position estimation section (8) estimates the non-detected one dividing line as a first estimated dividing line for departure determination based on a position of the one dividing line prior to non-detection stored in the dividing line position storage section (3).

10. The lane departure warning apparatus (100) according to claim 9, wherein

the dividing line position estimation section (8) estimates a second estimated dividing line for departure determination on a side of the other dividing line based on a position of the first estimated dividing line for departure determination.

11. The lane departure warning apparatus (100) according to claim 7, wherein
in the case where the one dividing line was detected by the dividing line detection section (2) during estimation of the one dividing line, the dividing line position estimation section (8) stops the estimation and employs a position of the detected one dividing line if the position of the detected one dividing line and a position of the estimated dividing line for departure determination are within a specified range, whereas if the position of the detected one dividing line and the position of the estimated dividing line for departure determination are out of the specified range, the dividing line position estimation section (8) continues the estimation and employs the position of the selected estimated dividing line for departure determination.

12. The lane departure warning apparatus (100) according to claim 11, wherein
the dividing line position estimation section (8) stops the estimation when the one dividing line could not be detected by the dividing line detection section (2) in a specified travel distance from start of the estimation.

13. The lane departure warning apparatus (100) according to claim 7, comprising:

a steering angle storage section (5) for detecting and storing a steering angle of the vehicle; and a vehicle speed storage section (7) for detecting and storing a vehicle speed of the vehicle, wherein
the parameter is the steering angle.

14. The lane departure warning apparatus (100) according to claim 7, comprising:

a yaw rate detection section for detecting a yaw rate of the vehicle; and a vehicle speed storage section (7) for detecting and storing a vehicle speed of the vehicle, wherein
the parameter is the yaw rate.

15. A lane departure warning apparatus (100) for determining whether or not a vehicle departs from a lane based on images of outside of the vehicle picked up during travel with an image pickup device (1) which picks up images of the outside of the vehicle and outputting a warning signal upon determination of departure, comprising:

a traffic information acquisition section for acquiring traffic information;
a dividing line detection section (2) for detecting dividing lines of a lane on which the vehicle is travelling based on the images;
a dividing line position storage section (3) for storing positions of the dividing lines detected by the dividing line detection section (2);
a dividing line position estimation section (8) for estimating an estimated dividing line for departure determination based on the traffic information acquired by the traffic information acquisition section in the case where an amount of change in a parameter representing a turn of the vehicle in a specified travel distance or a specified period of time is smaller than a preset first threshold and an amount of change in a clearance between the dividing line detected by the dividing line detection section (2) and the vehicle is equal to or larger than a preset second threshold; and
a departure determination section (9) for determining whether or not the vehicle departs from the lane based on a position of the estimated dividing line for departure determination estimated by the dividing line position estimation section (8).

16. A lane departure warning system, comprising:

a lane departure warning apparatus (100) according to claim 3 and at least either one of a warning sound generation section (11) and a warning display section (12) for informing a driver of information based on a warning signal outputted from the lane departure warning apparatus.

**Patentansprüche**

1. Warnvorrichtung (100) für das Verlassen einer Fahrspur zum Bestimmen, ob ein Fahrzeug eine Fahrspur verlässt, anhand von Bildern der Umgebung des Fahrzeugs, die während der Fahrt mit einer Bildaufnahmevorrichtung (1), die Bilder der Umgebung des Fahrzeugs aufnimmt, aufgenommen worden sind, und zum Ausgeben eines Warnsignals dann, wenn ein Verlassen bestimmt wird, die Folgendes umfasst:

einen Trennlinien-Detektionsbereich (2) zum Detektieren von Trennlinien einer Fahrspur, auf der das Fahrzeug fährt, anhand der Bilder;
einen Trennlinien-Positionsspeicherbereich (3) zum Speichern von Positionen der Trennlinien, die durch den Trennlinien-Detektionsbereich (2) detektiert worden sind;
einen Trennlinien-Positionsschätzbereich (8) zum Schätzen, wann eine Trennlinie eines Paars von Trennlinien, die auf beiden Seiten einer Fahrzeugbreitenrichtung des Fahrzeugs positioniert sind, nicht detektiert worden ist, wobei die eine Trennlinie auf einer Position der anderen Trennlinie als eine erste geschätzte Trennlinie basiert, zum Schätzen der nicht detektierten einen Trennlinie als eine zweite geschätzte Trennlinie anhand einer Position der einen Trennlinie vor der Nichtdetektion, die in dem Trennlinien-Positionsspeicherbereich (3) gespeichert ist, und zum Vergleichen einer Position der ersten geschätzten Trennlinie mit einer Position der zweiten geschätzten Trennlinie, um entweder die erste geschätzte Trennlinie oder die zweite geschätzte Trennlinie als eine geschätzte Trennlinie für die Bestimmung des Verlassens auszuwählen; und
einen Bereich (9) des Bestimmens des Verlassens zum Bestimmen, ob das Fahrzeug die Fahrspur verlässt, anhand einer Position der geschätzten Trennlinie für eine Bestimmung des Verlassens, die durch den Trennlinien-Positionsschätzbereich (8) ausgewählt worden ist.

2. Warnvorrichtung (100) für das Verlassen einer Fahrspur nach Anspruch 1, wobei
der Trennlinien-Positionsschätzbereich (8) entweder die erste geschätzte Trennlinie oder die zweite geschätzte Trennlinie als eine geschätzte Trennlinie für eine Bestimmung des Verlassens anhand eines Abstands zwischen der ersten geschätzten Trennlinie und der zweiten geschätzten Trennlinie an einem Punkt auswählt, der eine bestimmte Fahrtstrecke von einem Punkt, ab dem die eine Trennlinie nicht mehr detektiert worden ist, beabstandet ist.

3. Warnvorrichtung (100) für das Verlassen einer Fahrspur nach Anspruch 2, wobei
der Trennlinien-Positionsschätzbereich (8) die erste geschätzte Trennlinie als eine geschätzte Trennlinie zur Bestimmung des Verlassens auswählt, wenn der Abstand kleiner oder gleich einem Grenzwert ist, wobei wenn der Abstand größer als der Grenzwert ist, der Trennlinien-Positionsschätzbereich (8) die zweite geschätzte Trennlinie als eine geschätzte Trennlinie für die Bestimmung des Verlassens auswählt.

4. Warnvorrichtung (100) für das Verlassen einer Fahrspur nach Anspruch 1, wobei
der Trennlinien-Positionsschätzbereich (8) eine Fahrtortskurve des Fahrzeugs anhand eines Lenkwinkels und einer Fahrzeuggeschwindigkeit berechnet und die zweite geschätzte Trennlinie anhand der berechneten Fahrtortskurve und der Position der einen Trennlinie vor der Nichtdetektion, die in dem Trennlinien-Positionsspeicherbereich (3) gespeichert ist, schätzt.

5. Warnvorrichtung (100) für das Verlassen einer Fahrspur nach Anspruch 1, wobei
in dem Fall, in dem die eine Trennlinie durch den Trennlinien-Detektionsbereich (2) während der Schätzung der einen Trennlinie detektiert worden ist, der Trennlinien-Positionsschätzbereich (8) die Schätzung anhält und eine Position der detektierten einen Trennlinie verwendet, falls die Position der detektierten einen Trennlinie und eine Position der geschätzten Trennlinie für die Bestimmung des Verlassens innerhalb eines bestimmten Bereichs liegen, wobei falls die Position der detektierten einen Trennlinie und die Position der geschätzten Trennlinie für die Bestimmung des Verlassens außerhalb des bestimmten Bereichs liegen, der Trennlinien-Positionsschätzbereich (8) die Schätzung fortführt und die Position der ausgewählten geschätzten Trennlinie für die Bestimmung des Verlassens verwendet.

6. Warnvorrichtung (100) für das Verlassen einer Fahrspur nach Anspruch 5, wobei
der Trennlinien-Positionsschätzbereich (8) die Schätzung anhält, wenn die eine Trennlinie durch den Trennlinien-Detektionsbereich (2) in einer bestimmten Fahrtstrecke von dem Beginn der Schätzung nicht detektiert werden konnte.

7. Warnvorrichtung (100) für das Verlassen einer Fahrspur zum Bestimmen, ob ein Fahrzeug eine Fahrspur verlässt, anhand von Bildern der Umgebung des Fahrzeugs, die während der Fahrt mit einer Bildaufnahmevorrichtung (1), die Bilder der Umgebung des Fahrzeugs aufnimmt, aufgenommen worden sind, und zum Ausgeben eines Warnsignals dann, wenn ein Verlassen bestimmt wird, die Folgendes umfasst:

einen Trennlinien-Detektionsbereich (2) zum Detektieren von Trennlinien einer Fahrspur, auf der das Fahrzeug fährt, anhand der Bilder;

einen Trennlinien-Positionsspeicherbereich (3) zum Speichern von Positionen der Trennlinien, die durch den Trennlinien-Detektionsbereich (2) detektiert worden sind;

einen Trennlinien-Positionsschätzbereich (8) zum Schätzen einer geschätzten Trennlinie für die Bestimmung eines Verlassens anhand der Position der Trennlinie, die in dem Trennlinien-Positionsspeicherbereich (3) gespeichert ist, in dem Fall, in dem ein Änderungsbetrag eines Parameters, der ein Abbiegen des Fahrzeugs in einer bestimmten Fahrstrecke oder einem bestimmten Zeitraum darstellt, kleiner als ein voreingestellter erster Grenzwert ist und ein Änderungsbetrag eines Abstands zwischen der Trennlinie, die durch den Trennlinien-Detektionsbereich (2) detektiert worden ist, und dem Fahrzeug größer oder gleich einem voreingestellten zweiten Grenzwert ist; und

einen Bereich (9) des Bestimmens des Verlassens zum Bestimmen, ob das Fahrzeug die Fahrspur verlässt, anhand einer Position der geschätzten Trennlinie für eine Bestimmung des Verlassens, die durch den Trennlinien-Positionsschätzbereich (8) ausgewählt worden ist.

**8.** Warnvorrichtung (100) für das Verlassen einer Fahrspur nach Anspruch 7, wobei
wenn beide eines Paares von Trennlinien, die auf beiden Seiten einer Fahrzeugbreitenrichtung des Fahrzeugs positioniert sind, durch den Trennlinien-Detektionsbereich (2) detektiert werden, der Trennlinien-Positionsschätzbereich (8) eine geschätzte Trennlinie für die Bestimmung eines Verlassens schätzt, die eine Trennlinie mit einem größeren Änderungsbetrag des Abstands zu dem Fahrzeug, der auf einer Position der Trennlinie basiert, und mit einem kleineren Änderungsbetrag des Abstands zu dem Fahrzeug, der in dem TrennlinienPositionsspeicherbereich (3) gespeichert ist, ist.

**9.** Warnvorrichtung (100) für das Verlassen einer Fahrspur nach Anspruch 7, wobei
wenn eine Trennlinie eines Paares von Trennlinien, die auf beiden Seiten einer Fahrzeugbreitenrichtung des Fahrzeugs positioniert sind, durch den Trennlinien-Detektionsbereich (2) nicht detektiert worden ist, der Trennlinien-Positionsschätzbereich (8) die nicht detektierte eine Trennlinie als eine erste geschätzte Trennlinie für die Bestimmung eines Verlassens anhand einer Position der einen Trennlinie vor der Nichtdetektion, die in dem Trennlinien-Positionsspeicherbereich (3) gespeichert ist, schätzt.

**10.** Warnvorrichtung (100) für das Verlassen einer Fahrspur nach Anspruch 9, wobei
der Trennlinien-Positionsschätzbereich (8) eine zweite geschätzte Trennlinie für die Bestimmung eines Verlassens auf einer Seite der anderen Trennlinie anhand einer Position der ersten geschätzten Trennlinie für die Bestimmung eines Verlassens schätzt.

**11.** Warnvorrichtung (100) für das Verlassen einer Fahrspur nach Anspruch 7, wobei
in dem Fall, in dem während der Schätzung der einen Trennlinie die eine Trennlinie durch den Trennlinien-Detektionsbereich (2) detektiert worden ist, der Trennlinien-Positionsschätzbereich (8) die Schätzung anhält und eine Position der detektierten einen Trennlinie verwendet, falls die Position der detektierten einen Trennlinie und eine Position der geschätzten Trennlinie für die Bestimmung eines Verlassens innerhalb eines bestimmten Bereichs liegen, wobei falls die Position der detektierten einen Trennlinie und die Position der geschätzten Trennlinie für die Bestimmung eines Verlassens außerhalb des bestimmten Bereichs liegen, der Trennlinien-Positionsschätzbereich (8) die Schätzung fortführt und die Position der ausgewählten geschätzten Trennlinie für die Bestimmung eines Verlassens verwendet.

**12.** Warnvorrichtung (100) für das Verlassen einer Fahrspur nach Anspruch 11, wobei
der Trennlinien-Positionsschätzbereich (8) die Schätzung anhält, wenn die eine Trennlinie durch den Trennlinien-Detektionsbereich (2) in einer bestimmten Fahrtstrecke von dem Beginn der Schätzung nicht detektiert werden konnte.

**13.** Warnvorrichtung (100) für das Verlassen einer Fahrspur nach Anspruch 7, die Folgendes umfasst:

einen Lenkwinkel-Speicherbereich (5) zum Detektieren und Speichern eines Lenkwinkels des Fahrzeugs; und
einen Fahrzeuggeschwindigkeits-Speicherbereich (7) zum Detektieren und Speichern einer Fahrzeuggeschwindigkeit des Fahrzeugs; wobei
der Parameter der Lenkwinkel ist.

**14.** Warnvorrichtung (100) für das Verlassen einer Fahrspur nach Anspruch 7, die Folgendes umfasst:

einen Giergeschwindigkeits-Detektionsabschnitt zum Detektieren einer Giergeschwindigkeit des Fahrzeugs; und einen Fahrzeuggeschwindigkeits-Speicherbereich (7) zum Detektieren ein Speichern einer Fahrzeuggeschwindigkeit des Fahrzeugs, wobei
der Parameter die Giergeschwindigkeit ist.

15. Warnvorrichtung (100) für das Verlassen einer Fahrspur zum Bestimmen, ob ein Fahrzeug eine Fahrspur verlässt, anhand von Bildern der Umgebung des Fahrzeugs, die während der Fahrt mit einer Bildaufnahmevorrichtung (1), die Bilder der Umgebung des Fahrzeugs aufnimmt, aufgenommen worden sind, und zum Ausgeben eines Warnsignals dann, wenn ein Verlassen bestimmt wird, die Folgendes umfasst:

einen Verkehrsinformationen-Erhaltungsabschnitt zum Erhalten von Verkehrsinformationen;
einen Trennlinien-Detektionsbereich (2) zum Detektieren von Trennlinien einer Fahrspur, auf der das Fahrzeug fährt, anhand der Bilder;
einen Trennlinien-Positionsspeicherbereich (3) zum Speichern von Positionen der Trennlinien, die durch den Trennlinien-Detektionsbereich (2) detektiert worden sind;
einen Trennlinien-Positionsschätzbereich (8) zum Schätzen einer geschätzten Trennlinie für die Bestimmung eines Verlassens anhand der Verkehrsinformationen, die durch den Verkehrsinformationen-Erhaltungsabschnitt erhalten worden sind, in dem Fall, in dem ein Änderungsbetrag eines Parameters, der ein Abbiegen des Fahrzeugs in einer bestimmten Fahrstrecke oder einem bestimmten Zeitraum darstellt, kleiner als ein voreingestellter erster Grenzwert ist und ein Änderungsbetrag eines Abstands zwischen der Trennlinie, die durch den Trennlinien-Detektionsbereich (2) detektiert worden ist, und dem Fahrzeug größer oder gleich einem voreingestellten zweiten Grenzwert ist; und
einen Bereich (9) des Bestimmens des Verlassens zum Bestimmen, ob das Fahrzeug die Fahrspur verlässt, anhand einer Position der geschätzten Trennlinie für eine Bestimmung des Verlassens, die durch den Trennlinien-Positionsschätzbereich (8) ausgewählt worden ist.

16. Warnvorrichtung für das Verlassen einer Fahrspur, die Folgendes umfasst:

eine Warnvorrichtung (100) für das Verlassen einer Fahrspur nach Anspruch 3 und einen Warnsignal-Erzeugungsabschnitt (11) und/oder einen Warnungs-Anzeigeabschnitt (12) zum Informieren eines Fahrers über Informationen anhand eines Warnsignals, das von der Warnvorrichtung für das Verlassen einer Fahrspur ausgegeben worden ist.

## Revendications

1. Appareil d'avertissement de sortie de voie (100) pour déterminer si un véhicule sort ou non d'une voie en se basant sur les images de l'extérieur du véhicule prises pendant la circulation avec un dispositif de prise d'images (1) qui prend des images de l'extérieur du véhicule et qui délivre un signal d'avertissement lors de la détermination d'une sortie de voie, comprenant :

une section de détection de ligne de division (2) pour détecter des lignes de division d'une voie sur laquelle le véhicule circule en se basant sur les images ;
une section de stockage de position de ligne de division (3) pour stocker les positions des lignes de division détectées par la section de détection de ligne de division (2) ;
une section d'estimation de position de ligne de division (8) pour estimer, lorsqu'une ligne de division, parmi une paire de lignes de division positionnées sur les deux côtés d'un véhicule dans la direction de la largeur du véhicule, n'est pas détectée, cette ligne de division en se basant sur une position de l'autre ligne de division à titre de première ligne de division estimée, et estimer la ligne de division qui n'est pas détectée comme étant une seconde ligne de division estimée en se basant sur une position de la première ligne de division avant la non détection, stockée dans la section de stockage de position de ligne de division (3), et pour comparer une position de la première ligne de division estimée avec une position de la seconde ligne de division estimée pour sélectionner soit la première ligne de division estimée soit la seconde ligne de division estimée à titre de ligne de division estimée pour la détermination de la sortie de voie ; et
une section de détermination de sortie de voie (9) pour déterminer si le véhicule sort ou non de la voie, en se basant sur une position de la ligne de division estimée pour la détermination de sortie de voie sélectionnée par la section d'estimation de position de ligne de division (8).

**2.** Appareil d'avertissement de sortie de voie (100) selon la revendication 1, dans lequel
la section d'estimation de position de ligne de division (8) sélectionne soit la première ligne de division estimée soit la seconde ligne de division estimée à titre de ligne de division estimée pour la détermination de sortie de voie en se basant sur un intervalle entre la première ligne de division estimée et la seconde ligne de division estimée à un point éloigné à raison d'une distance de circulation spécifiée depuis un point où la première ligne de division n'a plus été détectée.

**3.** Appareil d'avertissement de sortie de voie (100) selon la revendication 2, dans lequel
la section d'estimation de position de ligne de division (8) sélectionne la première ligne de division estimée à titre de ligne de division estimée pour la détermination de sortie de voie quand l'intervalle est égal ou inférieur à un seuil, alors que lorsque l'intervalle est plus grand que le seuil, la section d'estimation de position de ligne de division (8) sélectionne la seconde ligne de division estimée à titre de ligne de division estimée pour la détermination de sortie de voie.

**4.** Appareil d'avertissement de sortie de voie (100) selon la revendication 1, dans lequel
la section d'estimation de position de ligne de division (8) calcule un lieu de déplacement du véhicule en se basant sur un angle de direction et sur une vitesse du véhicule, et estime la seconde ligne de division estimée en se basant sur le lieu de déplacement calculé et sur la position de la première ligne de division avant la non détection, stockée dans la section de stockage de position de ligne de division (3).

**5.** Appareil d'avertissement de sortie de voie (100) selon la revendication 1, dans lequel
dans le cas où la première ligne de division a été détectée par la section de détection de ligne de division (2) pendant l'estimation de cette ligne de division, la section d'estimation de position de ligne de division (8) arrête l'estimation et emploie une position de la première ligne de division détectée si la position de la première ligne de division détectée et une position de la ligne de division estimée pour la détermination de sortie de voie tombent dans une plage spécifiée, alors que si la position de la première ligne de division détectée et la position de la ligne de division estimée pour la détermination de sortie de voie tombent hors de la plage spécifiée, la section d'estimation de position de ligne de division (8) continue l'estimation et emploie la position de la ligne de division estimée sélectionnée pour la détermination de sortie de voie.

**6.** Appareil d'avertissement de sortie de voie (100) selon la revendication 5, dans lequel
la section d'estimation de position de ligne de division (8) arrête l'estimation quand la première ligne de division n'a pas pu être détecté par la section de détection de ligne de division (2) dans une distance de déplacement spécifiée depuis le début de l'estimation.

**7.** Appareil d'avertissement de sortie de voie (100) pour déterminer si un véhicule sort ou non d'une voie en se basant sur des images de l'extérieur du véhicule prises pendant la circulation avec un dispositif de prise d'images (1) qui prend des images de l'extérieur du véhicule et qui délivre un signal d'avertissement lors d'une détermination d'une sortie de voie, comprenant :

une section de détection de ligne de division (2) pour détecter des lignes de division d'une voie sur laquelle le véhicule est en circulation, en se basant sur les images ;
une section de stockage de position de ligne de division (3) pour stocker des positions des lignes de division détectées par la section de détection de ligne de division (2) ;
une section d'estimation de position de ligne de division (8) pour estimer une ligne de division estimée pour la détermination de sortie de voie en se basant sur la position de la ligne de division stockée dans la section de stockage de position de ligne de division (8) dans le cas où une valeur d'un changement d'un paramètre représentant un virage du véhicule dans une distance de déplacement spécifiée ou une période temporelle spécifié est plus petite qu'un premier seuil préétabli, et où une valeur de changement dans un intervalle entre la ligne de division détectée par la section de détection de ligne de division (2) et le véhicule est égale ou supérieure à un second seuil préétabli ; et
une section de détermination de sortie de voie (9) pour déterminer si le véhicule sort ou non de la voie en se basant sur une position de la ligne de division estimée pour la détermination de sortie de voie, estimée par la section d'estimation de position de ligne de division (8).

**8.** Appareil d'avertissement de sortie de voie (100) selon la revendication 7, dans lequel
lorsque les deux lignes d'une paire de lignes de division positionnées sur les deux côtés d'un véhicule dans la direction en largeur du véhicule sont détectées par la section de détection de ligne de division (2), la section d'estimation de position de ligne de division (8) estime une ligne de division estimée pour la détermination de sortie de voie, qui est une ligne de division présentant une plus grande valeur de changement dans l'intervalle par rapport au véhicule en se basant sur une position de la ligne de division avec une plus faible valeur de changement dans l'intervalle par rapport au véhicule, stockées dans la section de stockage de position de ligne de division (3).

9. Appareil d'avertissement de sortie de voie (100) selon la revendication 7, dans lequel
quand une ligne de division parmi une paire de lignes de division positionnées sur les deux côtés d'un véhicule dans la direction en largeur du véhicule n'est pas détectée par la section de détection de ligne de division (2), la section d'estimation de position de ligne de division (8) estime la ligne de division non détectée à titre de première ligne de division estimée pour la détermination de sortie de voie en se basant sur une position de cette ligne de division avant l'absence de détection, stockée dans la section de stockage de position de ligne de division (3).

10. Appareil d'avertissement de sortie de voie (100) selon la revendication 9, dans lequel
la section d'estimation de position de ligne de division (8) estime une seconde ligne de division estimée pour la détermination de sortie de voie, sur un côté de l'autre ligne de division en se basant sur une position de la première ligne de division estimée, pour la détermination de sortie de voie.

11. Appareil d'avertissement de sortie de voie (100) selon la revendication 7, dans lequel
dans le cas où la première ligne de division a été détectée par la section de détection de ligne de division (2) pendant l'estimation de la première ligne de division, la section d'estimation de position de ligne de division (8) arrête l'estimation et emploie une position de la première ligne de division détectée si la position de la première ligne de division détectée et une position de la ligne de division estimée pour la détermination de sortie de voie tombent dans une plage spécifiée, alors que si la position de la première ligne de division détectée et la position de la ligne de division estimée pour la détermination de sortie de voie tombent hors de la plage spécifiée, la section d'estimation de position de ligne de division (8) continue l'estimation et emploie la position de la ligne de division estimée sélectionnée pour la détermination de sortie de voie.

12. Appareil d'avertissement de sortie de voie (100) selon la revendication 11, dans lequel
la section d'estimation de position de ligne de division (8) arrête l'estimation quand la première ligne de division n'a pas pu être détectée par la section de détection de ligne de division (2) dans une distance de déplacement spécifiée depuis le début de l'estimation.

13. Appareil d'avertissement de sortie de voie (100) selon la revendication 7, comprenant :

une section de stockage d'angle de direction (5) pour détecter et stocker un angle de direction du véhicule ; et
une section de stockage de vitesse du véhicule (7) pour détecter et stocker une vitesse du véhicule,
dans lequel le paramètre est l'angle de direction.

14. Appareil d'avertissement de sortie de voie (100) selon la revendication 7, comprenant :

une section de détection de taux de lacet pour détecter un taux de lacet du véhicule ; et une section de stockage de vitesse du véhicule (7) pour détecter et pour stocker une vitesse du véhicule, dans lequel :

le paramètre est le taux de lacet.

15. Appareil d'avertissement de sortie de voie (100) pour déterminer si un véhicule sort ou non d'une voie en se basant sur des images de l'extérieur du véhicule, prises pendant le déplacement avec un dispositif de prise d'images (1) qui prend des images de l'extérieur du véhicule et qui délivre un signal d'avertissement lors de la détermination d'une sortie de voie, comprenant :

une section d'acquisition d'information de trafic pour acquérir des informations de trafic ;
une section de détection de ligne de division (2) pour détecter des lignes de division d'une voie sur laquelle le véhicule circule, en se basant sur les images ;
une section de stockage de position de ligne de division (3) pour stocker des positions des lignes de division détectées par la section de détection de ligne de division (2) ;
une section d'estimation de position de ligne de division (8) pour estimer une ligne de division estimée pour la détermination de sortie de voie, en se basant sur les informations de trafic acquises par la section d'acquisition d'information de trafic dans le cas où une valeur d'un changement d'un paramètre représentant un virage du véhicule dans une distance de déplacement spécifiée ou une période temporelle spécifiée est plus petite qu'un premier seuil préétabli, et une valeur de changement dans un intervalle entre la ligne de division détectée par la section de détection de ligne de division (2) et le véhicule est égale ou supérieure à un second seuil préétabli ; et une section de détermination de sortie de voie (9) pour déterminer si le véhicule sort ou non de la voie, en se basant sur une position de la ligne de division estimée pour la détermination de sortie de voie, estimée par la section d'estimation de position de ligne de division (8).

16. Système d'avertissement de sortie de voie, comprenant :

un appareil d'avertissement de sortie de voie (100) selon la revendication 3, et au moins une section parmi une section de génération sonore d'avertissement (11) et une section d'affichage d'avertissement (12) pour informer un conducteur avec des informations basées sur un signal d'avertissement délivré par l'appareil d'avertissement de sortie de voie.

# FIG. 1

EP 2 492 888 B1

# FIG. 2

START

201 —⌐ Image capture

202 —⌐ Steering angle and vehicle speed acquisition/storage processing

203 —⌐ Dividing line detection processing

204 —⌐ Dividing line position storage processing

205 —⌐ Dividing line position estimation processing

206 —⌐ Departure determination processing

207 —⌐ Warning generation processing

RETURN

# FIG. 3

# FIG. 4A

# FIG. 4B

## FIG. 5

Dividing line position estimation processing

501 — Dividing line estimating flag is OFF? — NO → 507 — Dividing line under estimation is detected? — NO → 510 — Specified distance is traveled after start of estimation? — NO → Calculate first estimated dividing line ~513

501 YES ↓

502 — One dividing line is non-detected? — NO
502 YES ↓

503 — Calculate first estimated dividing line

508 — Turn OFF dividing line estimating flag

510 YES ↓

511 — Turn OFF dividing line estimating flag

513 → Calculate second estimated dividing line ~514

504 — Calculate second estimated dividing line

509 — Stop dividing line estimation and employ detected dividing line

512 — Stop dividing line estimation and regard the dividing line under estimation as non-detected

514 → Estimated dividing line selection processing ~515

Estimated dividing line selection processing ~505

Turn ON dividing line estimating flag ~506

RETURN

EP 2 492 888 B1

## FIG. 6

## FIG. 7A

## FIG. 7B

# FIG. 8

## FIG. 9

EP 2 492 888 B1

# FIG. 10

Dividing line position estimation processing

1001 — Dividing line estimating flag is OFF? — NO → 1006 Dividing line under estimation is detected? — NO → 1009 Specified distance is traveled after start of estimation? — NO → 1012 Estimate position of one dividing line based on position of the other dividing line.

YES ↓

1002 — Change in rudder angle is small? — NO →

YES ↓

1003 — Change in distance to one dividing line is large? — NO →

YES ↓

1004 — Turn ON dividing line estimating flag

↓

Estimate position of one dividing line based on position of the other dividing line — 1005

1007 — Turn OFF dividing line estimating flag

↓

Stop dividing line estimation and employ detected dividing line — 1008

1010 — Turn OFF dividing line estimating flag

↓

Stop dividing line estimation and regard the dividing line under estimation as non-detected — 1011

RETURN

EP 2 492 888 B1

## FIG. 11

Steering angle — 1101

Steering angle convergence flag — 1102

τ  λ  τ  λ

Time

A  B  C  D  Time

1  0

# FIG. 12

FIG. 13

# FIG. 14

# FIG. 15

# FIG. 16

EP 2 492 888 B1

# FIG. 17

START

201 — Image capture

202 — Steering angle and vehicle speed acquisition/storage processing

1701 — Traffic information acquisition processing

1702 — Threshold setting processing

203 — Dividing line detection processing

204 — Dividing line position storage processing

205 — Dividing line position estimation processing

206 — Departure determination processing

207 — Warning generation processing

RETURN

# FIG. 18

# FIG. 19

Steering angle
convergence flag

Dividing line
displacement
determination flag

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009298362 A
- US 20100295668 A1
- US 20100246889 A1
- EP 1962254 A2
- JP 2009181310 A
- JP 2009143309 A